# EUROPEAN PATENT APPLICATION

(11) **EP 4 550 855 A1**
(43) Date of publication of application: **07.05.2025**
(21) Application number: 23838788.0
(22) Date of filing: 30.06.2023
(51) Int. Cl.: H04W 4/06

(54) **MEASUREMENT CONFIGURATION METHOD, ACCESS NETWORK DEVICE AND TERMINAL DEVICE**

(30) Priority: 15.07.2022 CN 202210829992
(71) Applicant: Huawei Technologies Co., Ltd., Shenzhen, Guangdong 518129 (CN)
(72) Inventor: HU, Xingxing, Shenzhen, Guangdong 518129 (CN)
(74) Representative: Gill Jennings & Every LLP
(86) International application number: PCT/CN2023/105349
(87) International publication number: WO 2024/012296

(57) **Abstract**

This application provides a measurement configuration method, an access network device, and a terminal device, and provides a specific method for QoE measurement on a multicast service, so that a network side optimizes a network based on a QoE measurement result of the multicast service, thereby improving a performance parameter of the multicast service, and improving communication quality of the multicast service. The method includes: obtaining quality of experience QoE measurement configuration information of a first multicast service and first information, where the first information is related to QoE measurement on a unicast service, and the first multicast service corresponds to the unicast service; determining application layer measurement configuration information of the first multicast service based on the QoE measurement configuration information of the first multicast service and the first information; and sending the application layer measurement configuration information to a first terminal device.

## Description

This application claims priority to Chinese Patent Application No. 202210829992.3, filed with the China National Intellectual Property Administration on July 15, 2022 and entitled "MEASUREMENT CONFIGURATION METHOD, ACCESS NETWORK DEVICE, AND TERMINAL DEVICE", which is incorporated herein by reference in its entirety.

### TECHNICAL FIELD

This application relates to the communication field, and more specifically, relates to a measurement configuration method, an access network device, and a terminal device.

### BACKGROUND

For some streaming class services or voice services, such as streaming services (streaming services), signal quality alone cannot reflect user experience of using these services by a user. To learn about user experience, an operator measures the streaming service, to better optimize a network and improve user experience. This type of measurement collection is referred to as quality of experience (quality of experience, QoE) measurement collection. Currently, QoE measurement involves only a unicast service, and no feasible solution is proposed for QoE measurement on a multicast service.

### SUMMARY

This application provides a measurement configuration method, an access network device, and a terminal device, which are used for QoE measurement on a multicast service.

According to a first aspect, a method for measuring quality of experience of a terminal device is provided, and the method is applied to a first access network device. The method includes: obtaining QoE measurement configuration information of a first multicast service and first information, where the first information is related to QoE measurement on a unicast service, and the first multicast service corresponds to the unicast service; determining application layer measurement configuration information of the first multicast service based on the QoE measurement configuration information of the first multicast service and the first information; and sending the application layer measurement configuration information to a first terminal device.

The first access network device obtains the QoE measurement configuration information of the first multicast service and the first information, where the first information is related to the QoE measurement on the unicast service, and the first multicast service corresponds to the unicast service. The first access network device determines the application layer measurement configuration information of the first multicast service based on the QoE measurement configuration information of the first multicast service and the first information, where the application layer measurement configuration information of the first multicast service is determined with reference to the first information related to the unicast service. Information about a unicast service corresponding to a multicast service is also considered when QoE measurement on the multicast service is implemented, and the first terminal device no longer needs to receive application layer measurement configuration information of the unicast service. The first access network device sends the application layer measurement configuration information to the first terminal device, and the first terminal device performs measurement based on the application layer measurement configuration information, and reports an application layer measurement result to the first access network device. Therefore, a network side device such as an operations, administration and maintenance (operations, administration and maintenance, OAM) device can optimize a performance parameter of a multicast service based on the application layer measurement result, to improve communication quality of the multicast service.

With reference to the first aspect, in a possible implementation of the first aspect, the first information includes first indication information, and the first indication information indicates that the first terminal device uses the QoE measurement configuration information when the first terminal device changes from receiving the first multicast service to receiving the unicast service; and the application layer measurement configuration information includes second indication information, and the second indication information indicates that the first terminal device uses the application layer measurement configuration information when the first terminal device changes from receiving the first multicast service to receiving the unicast service.

The first information obtained by the first access network device includes the first indication information, and the first indication information indicates that the first terminal device uses the QoE measurement configuration information when the first terminal device changes from receiving the first multicast service to receiving the unicast service. The application layer measurement configuration information determined by the first access network device based on the QoE measurement configuration information of the first multicast service and the first information includes the second indication information, and the second indication information indicates that the first terminal device uses the application layer measurement configuration information when the first terminal device changes from receiving the first multicast service to receiving the unicast service. Therefore, the first terminal device may use the application layer measurement configuration information when the terminal device changes from receiving the first multicast service to receiving the unicast service. In other words, the terminal device uses the application layer measurement configuration information when being handed over from the first access network device that supports the first multicast service to a second access network device that does not support a multicast service. In this way, the first terminal device may continue to perform application layer measurement when being handed over to the second access network device that does not support the multicast service. The first terminal device no longer needs to receive the application layer measurement configuration information of the unicast service. This can reduce signaling overheads.

With reference to the first aspect, in a possible implementation of the first aspect, the first information includes QoE measurement configuration information of the unicast service; and the method further includes: sending application layer measurement configuration information of the unicast service to the first terminal device.

The first information obtained by the first access network device includes the QoE measurement configuration information of the unicast service. The first access network device sends the application layer measurement configuration information of the unicast service to the first terminal device. Therefore, after the terminal device receives the application layer measurement configuration information of the first multicast service and the application layer measurement configuration information of the unicast service, the terminal device uses the application layer measurement configuration information of the first multicast service in the first access network device that supports the multicast service, and the first terminal device may use the application layer measurement configuration information of the unicast service when being handed over to the second access network device that does not support the multicast service, so that the first terminal device may continue to perform application layer measurement when being handed over to the second access network device that does not support the multicast service.

With reference to the first aspect, in a possible implementation of the first aspect, the first information includes a service type of the unicast service.

With reference to the first aspect, in a possible implementation of the first aspect, the QoE measurement configuration information of the first multicast service includes a session identifier of the first multicast service.

The session identifier of the first multicast service is used to identify a multicast session on which application layer measurement is to be performed. It should be understood that when QoE measurement configuration information of a multicast service does not include a session identifier of the multicast service, QoE measurement may be performed on sessions of all multicast services by default.

With reference to the first aspect, in a possible implementation of the first aspect, the method further includes: receiving application layer measurement result information from the first terminal device, where the application layer measurement result information includes the session identifier of the first multicast service.

The session identifier of the first multicast service indicates a session of the first multicast service corresponding to the application layer measurement result information.

With reference to the first aspect, in a possible implementation of the first aspect, the method further includes: receiving the application layer measurement result information from the first terminal device, where the application layer measurement result information includes an identifier of a network slice, and the identifier of the network slice indicates a network slice of the first multicast service and/or a network slice of the unicast service.

With reference to the first aspect, in a possible implementation of the first aspect, the method further includes: sending first configuration information to the first terminal device, where the first configuration information includes access network device-visible application layer measurement configuration information, and the first configuration information is used to configure the first terminal device to report access network device-visible application layer measurement result information of the first multicast service; and receiving first measurement result information from the first terminal device, where the first measurement result information includes the access network device-visible application layer measurement result information, and the access network device-visible application layer measurement result information includes the session identifier of the first multicast service.

With reference to the first aspect, in a possible implementation of the first aspect, a propagation manner of the first multicast service is determined based on the first measurement result information.

With reference to the first aspect, in a possible implementation of the first aspect, the method further includes: The first access network device sends release information to the first terminal device when the first access network device determines that the first terminal device is to be handed over from the first access network device to a second access network device, where the release information indicates the first terminal device to release the first configuration information, and the second access network device does not support the first multicast service.

With reference to the first aspect, in a possible implementation of the first aspect, the method further includes: sending a first handover request to the second access network device, where the first handover request includes an identifier of the QoE measurement configuration information of the unicast service and an application layer measurement identifier of the unicast service, and the second access network device does not support the first multicast service.

The first access network device sends the first handover request to the second access network device, where the first handover request is used to request the first terminal device to access the second access network device, and the first handover request includes the identifier of the QoE measurement configuration information of the unicast service and the application layer measurement identifier of the unicast service, so that the second access network device may obtain the identifier of the QoE measurement configuration information of the unicast service and the application layer measurement identifier of the unicast service. When the first terminal device reports the application layer measurement result information to the second access network device, the application layer measurement identifier of the unicast service is carried in the application layer measurement result information. In this way, the second access network device may obtain the application layer measurement result information based on the application layer measurement identifier of the unicast service.

With reference to the first aspect, in a possible implementation of the first aspect, the first handover request further includes: the QoE measurement configuration information of the unicast service.

With reference to the first aspect, in a possible implementation of the first aspect, the method further includes: sending a first handover request to the second access network device, where the first handover request includes an identifier of the QoE measurement configuration information of the unicast service and an application layer measurement identifier of the unicast service, where the second access network device does not support the first multicast service, the identifier of the QoE measurement configuration information of the unicast service and the application layer measurement identifier of the unicast service are determined by the first access network device, and the identifier of the QoE measurement configuration information of the unicast service corresponds to an identifier of the QoE measurement configuration information of the first multicast service.

With reference to the first aspect, in a possible implementation of the first aspect, the first handover request includes the service type of the unicast service corresponding to a service type of the first multicast service.

With reference to the first aspect, in a possible implementation of the first aspect, the first handover request further includes: an access network device-visible application layer measurement indicator corresponding to the unicast service.

With reference to the first aspect, in a possible implementation of the first aspect, the method further includes: receiving a second handover request from a third access network device, where the third access network device does not support a multicast service, the second handover request includes a service type of a second multicast service, and the second handover request is used to request a second terminal device to access the first access network device.

According to a second aspect, a measurement configuration method is provided. The method is applied to a first access network device and includes: obtaining QoE measurement configuration information of a first unicast service and first information, where the first information is related to QoE measurement on a first multicast service, and the first unicast service corresponds to the first multicast service; determining application layer measurement configuration information of the first unicast service based on the QoE measurement configuration information of the first unicast service and the first information; and sending the application layer measurement configuration information to a first terminal device.

With reference to the second aspect, in a possible implementation of the second aspect, the first information includes first indication information, and the first indication information indicates that the first terminal device uses the QoE measurement configuration information of the first unicast service when the first terminal device changes from receiving the first unicast service to receiving the first multicast service; and the application layer measurement configuration information includes second indication information, and the second indication information indicates that the first terminal device uses the application layer measurement configuration information when the first terminal device changes from receiving the first unicast service to receiving the first multicast service.

With reference to the second aspect, in a possible implementation of the second aspect, the method further includes: sending a first handover request to a second access network device, where the first handover request includes an identifier of QoE measurement configuration information of the first multicast service and an application layer measurement identifier of the first multicast service, where the second access network device supports the first multicast service, an identifier of the QoE measurement configuration information of the first multicast service and the application layer measurement identifier of the first multicast service are determined by the first access network device, and the identifier of the QoE measurement configuration information of the first multicast service corresponds to an identifier of the QoE measurement configuration information of the first unicast service.

With reference to the second aspect, in a possible implementation of the second aspect, the first handover request includes a service type of the first multicast service corresponding to a service type of the first unicast service.

With reference to the second aspect, in a possible implementation of the second aspect, the method further includes: receiving a second handover request from a third access network device, where the second handover request is used to request a second terminal device to access the first access network device, the third access network device supports a multicast service, and the second handover request includes an identifier of QoE measurement configuration information of a second unicast service and an application layer measurement identifier of the second unicast service, where the identifier of the QoE measurement configuration information of the second unicast service and the application layer measurement identifier of the second unicast service are determined by the third access network device, and an identifier of QoE measurement configuration information of a second multicast service corresponds to the identifier of the QoE measurement configuration information of the second unicast service.

With reference to the second aspect, in a possible implementation of the second aspect, the second handover request further includes a service type of the second unicast service corresponding to a service type of the second multicast service.

With reference to the second aspect, in a possible implementation of the second aspect, the second handover request further includes access network device-visible application layer measurement configuration information corresponding to the second unicast service.

With reference to the second aspect, in a possible implementation of the second aspect, the method further includes: receiving application layer measurement result information sent by the second terminal device, where the application layer measurement result information includes a session identifier of a multicast service.

With reference to the second aspect, in a possible implementation of the second aspect, the method further includes: receiving application layer measurement result information sent by the second terminal device, where the application layer measurement result information includes an identifier of a network slice, and the identifier of the network slice indicates a network slice of a multicast service corresponding to the application layer measurement result information or a network slice of a unicast service.

With reference to the second aspect, in a possible implementation of the second aspect, the method further includes: receiving access network device-visible application layer measurement result information sent by the second terminal device.

According to a third aspect, an application layer measurement method is provided. The method is applied to a terminal device and includes: receiving application layer measurement configuration information and first information that are sent by a first access network device, where the application layer measurement configuration information includes application layer measurement configuration information of a first multicast service, the first information is related to application layer measurement on a first unicast service, the first unicast service corresponds to the first multicast service, the first information includes first indication information, and the first indication information indicates that the terminal device uses the application layer measurement configuration information of the first multicast service when the terminal device changes from receiving the first multicast service to receiving the first unicast service; or the application layer measurement configuration information includes application layer measurement configuration information of a first multicast service, and the first information includes application layer measurement configuration information of a first unicast service; or the application layer measurement configuration information includes application layer measurement configuration information of a second unicast service, the first information is related to application layer measurement on a second multicast service, the second unicast service corresponds to the second multicast service, the first information includes second indication information, and the second indication information indicates that the terminal device uses the application layer measurement configuration information of the second unicast service for measurement when the terminal device changes from receiving the second unicast service to receiving the second multicast service; and the terminal device sends application layer measurement result information to the first access network device based on the application layer measurement configuration information and the first information.

With reference to the third aspect, in a possible implementation of the third aspect, the application layer measurement result information includes a session identifier of the first multicast service; or the application layer measurement result information includes a session identifier of the first multicast service and an identifier of a network slice.

With reference to the third aspect, in a possible implementation of the third aspect, the application layer measurement configuration information of the first multicast service includes the session identifier of the first multicast service.

With reference to the third aspect, in a possible implementation of the third aspect, the first access network device supports the first multicast service, and the method further includes: receiving first configuration information sent by the first access network device, where the first configuration information includes access network device-visible application layer measurement configuration information, and the first configuration information is used to configure the first terminal device to report the access network device-visible application layer measurement result information of the first multicast service; and sending first measurement result information to the first access network device based on the first configuration information, where the first measurement result information includes the access network device-visible application layer measurement result information, and the first measurement result information includes the session identifier of the first multicast service.

According to a fourth aspect, a measurement configuration method is provided. The method is applied to a core network device or a network management device and includes: sending QoE measurement configuration information and first information to an access network device, where the QoE measurement configuration information includes QoE measurement configuration information of a first multicast service, the first information is related to QoE measurement on a first unicast service, the first multicast service corresponds to the first unicast service, the first information includes first indication information, and the first indication information indicates that a terminal device uses the QoE measurement configuration information of the first multicast service when the terminal device changes from receiving the first multicast service to receiving the first unicast service; or the QoE measurement configuration information includes QoE measurement configuration information of a second unicast service, the first information is related to QoE measurement on a second multicast service, the second multicast service corresponds to the second unicast service, the first information includes second indication information, and the second indication information indicates that a terminal device uses QoE measurement configuration information of the second multicast service when the terminal device changes from receiving the second unicast service to receiving the second multicast service; or the QoE measurement configuration information includes QoE measurement configuration information of a first multicast service, the first information is related to QoE measurement on a first unicast service, the first multicast service corresponds to the first unicast service, and the first information includes QoE measurement configuration information of the first unicast service.

With reference to the fourth aspect, in a possible implementation of the fourth aspect, the QoE measurement configuration information of the first multicast service includes a session identifier of the first multicast service.

With reference to the fourth aspect, in a possible implementation of the fourth aspect, the QoE measurement configuration information of the first multicast service includes a service type of the first unicast service corresponding to a service type of the first multicast service.

According to a fifth aspect, a measurement configuration method is applied. The method is applied to a first access network device and includes: obtaining QoE measurement configuration information of a multicast service, where the QoE measurement configuration information of the multicast service includes a service type of the multicast service and a service type of a unicast service, and the multicast service corresponds to the unicast service; determining application layer measurement configuration information of the multicast service based on the QoE measurement configuration information of the multicast service, where the application layer measurement configuration information of the multicast service includes the service type of the multicast service; and sending the application layer measurement configuration information of the multicast service to a terminal device.

With reference to the fifth aspect, in a possible implementation of the fifth aspect, the QoE measurement configuration information of the multicast service includes first indication information, and the first indication information indicates that the terminal device uses the QoE measurement configuration information when the terminal device changes from receiving the multicast service to receiving the unicast service.

With reference to the fifth aspect, in a possible implementation of the fifth aspect, the QoE measurement configuration information of the multicast service includes a session identifier of the multicast service.

With reference to the fifth aspect, in a possible implementation of the fifth aspect, the method further includes: receiving application layer measurement result information from the terminal device, where the application layer measurement result information includes the session identifier of the multicast service.

With reference to the fifth aspect, in a possible implementation of the fifth aspect, the method further includes: receiving the application layer measurement result information from the terminal device, where the application layer measurement result information includes an identifier of a network slice, and the identifier of the network slice indicates a network slice corresponding to the multicast service.

With reference to the fifth aspect, in a possible implementation of the fifth aspect, the method further includes: sending a handover request to a second access network device, where the handover request includes an identifier of QoE measurement configuration information of the unicast service and an application layer measurement identifier of the unicast service, and the handover request further includes the service type of the unicast service, where the second access network device does not support the multicast service, the identifier of the QoE measurement configuration information of the unicast service and the application layer measurement identifier of the unicast service are determined by the first access network device, and the identifier of the QoE measurement configuration information of the unicast service corresponds to an identifier of the QoE measurement configuration information of the multicast service.

According to a sixth aspect, a measurement configuration method is applied. The method is applied to a first access network device and includes: obtaining QoE measurement configuration information of a unicast service, where the QoE measurement configuration information of the unicast service includes a service type of the unicast service and a service type of a multicast service, and the unicast service corresponds to the multicast service; determining application layer measurement configuration information of the unicast service based on the QoE measurement configuration information of the unicast service, where the application layer measurement configuration information of the unicast service includes the service type of the unicast service; and
sending the application layer measurement configuration information to a terminal device.

With reference to the sixth aspect, in a possible implementation of the sixth aspect, the QoE measurement configuration information of the unicast service includes first indication information, and the first indication information indicates that the terminal device uses the QoE measurement configuration information when the terminal device changes from receiving the unicast service to receiving the multicast service.

With reference to the sixth aspect, in a possible implementation of the sixth aspect, the method further includes: sending a handover request to a second access network device, where the handover request includes an identifier of QoE measurement configuration information of the multicast service and an application layer measurement identifier of the multicast service, and the handover request further includes the service type of the multicast service, where the second access network device supports the multicast service, the identifier of the QoE measurement configuration information of the multicast service and the application layer measurement identifier of the multicast service are determined by the first access network device, and the identifier of the QoE measurement configuration information of the multicast service corresponds to an identifier of the QoE measurement configuration information of the unicast service.

According to a seventh aspect, an application layer measurement method is provided. The method is applied to a terminal device and includes: receiving application layer measurement configuration information sent by a first access network device, where the application layer measurement configuration information is application layer measurement configuration information of a multicast service, and the application layer measurement configuration information of the multicast service includes a service type of the multicast service; or the application layer measurement configuration information is application layer measurement configuration information of a unicast service, and the application layer measurement configuration information of the unicast service includes a service type of the unicast service; and sending application layer measurement result information to the first access network device based on the application layer measurement configuration information.

With reference to the seventh aspect, in a possible implementation of the seventh aspect, the application layer measurement configuration information is the application layer measurement configuration information of the multicast service, and the application layer measurement result information includes a session identifier of the multicast service; or the application layer measurement result information includes a session identifier of the multicast service and an identifier of a network slice.

With reference to the seventh aspect, in a possible implementation of the seventh aspect, the application layer measurement configuration information of the multicast service includes the session identifier of the multicast service.

With reference to the seventh aspect, in a possible implementation of the seventh aspect, the application layer measurement configuration information is the application layer measurement configuration information of the multicast service, the terminal device is handed over from the first access network device to a second access network device, the terminal device receives the unicast service under the second access network device, and the unicast service corresponds to the multicast service; and the method further includes: sending second application layer measurement result information to the second access network device based on the application layer measurement configuration information of the multicast service.

With reference to the seventh aspect, in a possible implementation of the seventh aspect, the second application layer measurement result information includes an identifier of a network slice, and the identifier of the network slice indicates a network slice of the unicast service corresponding to the application layer measurement result information.

With reference to the seventh aspect, in a possible implementation of the seventh aspect, the second application layer measurement result information includes a session identifier of the multicast service, and the session identifier of the multicast service indicates a session of the multicast service corresponding to the application layer measurement result information.

With reference to the seventh aspect, in a possible implementation of the seventh aspect, the application layer measurement configuration information is the application layer measurement configuration information of the unicast service, the terminal device is handed over from the first access network device to a second access network device, the terminal device receives the multicast service under the second access network device, and the multicast service corresponds to the unicast service; and the method further includes: sending second application layer measurement result information to the second access network device based on the application layer measurement configuration information of the unicast service.

With reference to the seventh aspect, in a possible implementation of the seventh aspect, the second application layer measurement result information includes a session identifier of the multicast service, and the session identifier of the multicast service indicates a session of the multicast service corresponding to the application layer measurement result information.

With reference to the seventh aspect, in a possible implementation of the seventh aspect, the second application layer measurement result information includes an identifier of a network slice, and the identifier of the network slice indicates a network slice of the multicast service corresponding to the application layer measurement result information.

According to an eighth aspect, an access network device is provided. The access network device is a first access network device and includes: a transceiver unit, configured to obtain QoE measurement configuration information of a first multicast service and first information, where the first information is related to QoE measurement on a unicast service, and the first multicast service corresponds to the unicast service; and a processing unit, configured to determine application layer measurement configuration information of the first multicast service based on the QoE measurement configuration information of the first multicast service and the first information; where the transceiver unit is further configured to send the application layer measurement configuration information to a first terminal device.

With reference to the eighth aspect, in a possible implementation of the eighth aspect, the first information includes first indication information, and the first indication information indicates that the first terminal device uses the QoE measurement configuration information when the first terminal device changes from receiving the first multicast service to receiving the unicast service; and the application layer measurement configuration information includes second indication information, and the second indication information indicates that the first terminal device uses the application layer measurement configuration information when the first terminal device changes from receiving the first multicast service to receiving the unicast service.

With reference to the eighth aspect, in a possible implementation of the eighth aspect, the first information includes QoE measurement configuration information of the unicast service; and the transceiver unit is further configured to send application layer measurement configuration information of the unicast service to the first terminal device.

With reference to the eighth aspect, in a possible implementation of the eighth aspect, the first information includes a service type of the unicast service.

With reference to the eighth aspect, in a possible implementation of the eighth aspect, the QoE measurement configuration information of the first multicast service includes a session identifier of the first multicast service.

With reference to the eighth aspect, in a possible implementation of the eighth aspect, the transceiver unit is further configured to: receive application layer measurement result information from the first terminal device, where the application layer measurement result information includes the session identifier of the first multicast service.

With reference to the eighth aspect, in a possible implementation of the eighth aspect, the transceiver unit is further configured to: receive the application layer measurement result information from the first terminal device, where the application layer measurement result information includes an identifier of a network slice, and the identifier of the network slice indicates a network slice of the first multicast service and/or a network slice of the unicast service.

With reference to the eighth aspect, in a possible implementation of the eighth aspect, the transceiver unit is further configured to: send first configuration information to the first terminal device, where the first configuration information includes access network device-visible application layer measurement configuration information, and the first configuration information is used to configure the first terminal device to report access network device-visible application layer measurement result information of the first multicast service; and receive first measurement result information from the first terminal device, where the first measurement result information includes the access network device-visible application layer measurement result information, and the access network device-visible application layer measurement result information includes the session identifier of the first multicast service.

With reference to the eighth aspect, in a possible implementation of the eighth aspect, the processing unit is further configured to: determine a propagation manner of the first multicast service based on the first measurement result information.

With reference to the eighth aspect, in a possible implementation of the eighth aspect, the transceiver unit is further configured to: send release information to the first terminal device when the first terminal device is to be handed over from the first access network device to a second access network device, where the release information indicates the first terminal device to release the first configuration information, and the second access network device does not support the first multicast service.

With reference to the eighth aspect, in a possible implementation of the eighth aspect, the transceiver unit is further configured to: send a first handover request to the second access network device, where the first handover request includes an identifier of the QoE measurement configuration information of the unicast service and an application layer measurement identifier of the unicast service, and the second access network device does not support the first multicast service.

With reference to the eighth aspect, in a possible implementation of the eighth aspect, the first handover request further includes: the QoE measurement configuration information of the unicast service.

With reference to the eighth aspect, in a possible implementation of the eighth aspect, the transceiver unit is further configured to: send a first handover request to the second access network device, where the first handover request includes an identifier of the QoE measurement configuration information of the unicast service and an application layer measurement identifier of the unicast service, where the second access network device does not support the first multicast service, the identifier of the QoE measurement configuration information of the unicast service and the application layer measurement identifier of the unicast service are determined by the first access network device, and the identifier of the QoE measurement configuration information of the unicast service corresponds to an identifier of the QoE measurement configuration information of the first multicast service.

With reference to the eighth aspect, in a possible implementation of the eighth aspect, the first handover request includes the service type of the unicast service corresponding to a service type of the first multicast service.

With reference to the eighth aspect, in a possible implementation of the eighth aspect, the first handover request further includes: an access network device-visible application layer measurement indicator corresponding to the unicast service.

With reference to the eighth aspect, in a possible implementation of the eighth aspect, the transceiver unit is further configured to: receive a second handover request from a third access network device, where the third access network device does not support a multicast service, the second handover request includes a service type of a second multicast service, and the second handover request is used to request a second terminal device to access the first access network device.

According to a ninth aspect, an access network device is provided. The access network device is a first access network device and includes: a transceiver unit, configured to obtain QoE measurement configuration information of a first unicast service and first information, where the first information is related to QoE measurement on a first multicast service, and the first unicast service corresponds to the first multicast service; and a processing unit, configured to determine application layer measurement configuration information of the first unicast service based on the QoE measurement configuration information of the first unicast service and the first information; where the transceiver unit is further configured to send the application layer measurement configuration information to a first terminal device.

With reference to the ninth aspect, in a possible implementation of the ninth aspect, the first information includes first indication information, and the first indication information indicates that the first terminal device uses the QoE measurement configuration information of the first unicast service when the first terminal device changes from receiving the first unicast service to receiving the first multicast service; and the application layer measurement configuration information includes second indication information, and the second indication information indicates that the first terminal device uses the application layer measurement configuration information when the first terminal device changes from receiving the first unicast service to receiving the first multicast service.

With reference to the ninth aspect, in a possible implementation of the ninth aspect, the transceiver unit is further configured to: send a first handover request to a second access network device, where the first handover request includes an identifier of QoE measurement configuration information of the first multicast service and an application layer measurement identifier of the first multicast service, where the second access network device supports the first multicast service, the identifier of the QoE measurement configuration information of the first multicast service and the application layer measurement identifier of the first multicast service are determined by the first access network device, and the identifier of the QoE measurement configuration information of the first multicast service corresponds to an identifier of the QoE measurement configuration information of the first unicast service.

With reference to the ninth aspect, in a possible implementation of the ninth aspect, the first handover request includes a service type of the first multicast service corresponding to a service type of the first unicast service.

With reference to the ninth aspect, in a possible implementation of the ninth aspect, the transceiver unit is further configured to: receive a second handover request from a third access network device, where the second handover request is used to request a second terminal device to access the first access network device, the third access network device supports a multicast service, and the second handover request includes an identifier of QoE measurement configuration information of a second unicast service and an application layer measurement identifier of the second unicast service, where the identifier of the QoE measurement configuration information of the second unicast service and the application layer measurement identifier of the second unicast service are determined by the third access network device, and an identifier of QoE measurement configuration information of a second multicast service corresponds to the identifier of the QoE measurement configuration information of the second unicast service.

With reference to the ninth aspect, in a possible implementation of the ninth aspect, the second handover request further includes a service type of the second unicast service corresponding to a service type of the second multicast service.

With reference to the ninth aspect, in a possible implementation of the ninth aspect, the second handover request further includes access network device-visible application layer measurement configuration information corresponding to the second unicast service.

With reference to the ninth aspect, in a possible implementation of the ninth aspect, the transceiver unit is further configured to: receive application layer measurement result information sent by the second terminal device, where the application layer measurement result information includes a session identifier of a multicast service.

With reference to the ninth aspect, in a possible implementation of the ninth aspect, the transceiver unit is further configured to: receive application layer measurement result information sent by the second terminal device, where the application layer measurement result information includes an identifier of a network slice, and the identifier of the network slice indicates a network slice of a multicast service corresponding to the application layer measurement result information or a network slice of a unicast service.

With reference to the ninth aspect, in a possible implementation of the ninth aspect, the transceiver unit is further configured to: receive access network device-visible application layer measurement result information sent by the second terminal device.

According to a tenth aspect, a terminal device is provided, and the terminal device includes: a transceiver unit, configured to receive application layer measurement configuration information and first information that are sent by a first access network device, where the application layer measurement configuration information includes application layer measurement configuration information of a first multicast service, the first information is related to application layer measurement on a first unicast service, the first unicast service corresponds to the first multicast service, the first information includes first indication information, and the first indication information indicates that the terminal device uses the application layer measurement configuration information of the first multicast service when the terminal device changes from receiving the first multicast service to receiving the first unicast service; or the application layer measurement configuration information includes application layer measurement configuration information of a first multicast service, and the first information includes application layer measurement configuration information of a first unicast service; or the application layer measurement configuration information includes application layer measurement configuration information of a second unicast service, the first information is related to application layer measurement on a second multicast service, the second unicast service corresponds to the second multicast service, the first information includes second indication information, and the second indication information indicates that the terminal device uses the application layer measurement configuration information of the second unicast service for measurement when the terminal device changes from receiving the second unicast service to receiving the second multicast service; and the transceiver unit is further configured to send application layer measurement result information to the first access network device based on the application layer measurement configuration information and the first information.

With reference to the tenth aspect, in a possible implementation of the tenth aspect, the application layer measurement result information includes a session identifier of the first multicast service; or the application layer measurement result information includes a session identifier of the first multicast service and an identifier of a network slice.

With reference to the tenth aspect, in a possible implementation of the tenth aspect, the application layer measurement configuration information of the first multicast service includes the session identifier of the first multicast service.

With reference to the tenth aspect, in a possible implementation of the tenth aspect, the first access network device supports the first multicast service, and the transceiver unit is further configured to: receive first configuration information sent by the first access network device, where the first configuration information includes access network device-visible application layer measurement configuration information, and the first configuration information is used to configure the first terminal device to report the access network device-visible application layer measurement result information of the first multicast service; and send first measurement result information to the first access network device based on the first configuration information, where the first measurement result information includes the access network device-visible application layer measurement result information, and the first measurement result information includes the session identifier of the first multicast service.

According to an eleventh aspect, a core network device or a network management device is provided, and the core network device or the network management device includes: a transceiver unit, configured to send QoE measurement configuration information and first information to an access network device, where the QoE measurement configuration information includes QoE measurement configuration information of a first multicast service, the first information is related to QoE measurement on a first unicast service, the first multicast service corresponds to the first unicast service, the first information includes first indication information, and the first indication information indicates that a terminal device uses the QoE measurement configuration information of the first multicast service when the terminal device changes from receiving the first multicast service to receiving the first unicast service; or the QoE measurement configuration information includes QoE measurement configuration information of a second unicast service, the first information is related to QoE measurement on a second multicast service, the second multicast service corresponds to the second unicast service, the first information includes second indication information, and the second indication information indicates that a terminal device uses QoE measurement configuration information of the second multicast service when the terminal device changes from receiving the second unicast service to receiving the second multicast service; or the QoE measurement configuration information includes QoE measurement configuration information of a first multicast service, the first information is related to QoE measurement on a first unicast service, the first multicast service corresponds to the first unicast service, and the first information includes QoE measurement configuration information of the first unicast service.

With reference to the eleventh aspect, in a possible implementation of the eleventh aspect, the QoE measurement configuration information of the first multicast service includes a session identifier of the first multicast service.

With reference to the eleventh aspect, in a possible implementation of the eleventh aspect, the QoE measurement configuration information of the first multicast service includes a service type of the first unicast service corresponding to a service type of the first multicast service.

According to a twelfth aspect, a computer program product is provided. The computer program product includes instructions. When the instructions are run on a computer, the computer is enabled to perform the method in any one of the first aspect or the possible implementations of the first aspect, perform the method in any one of the second aspect or the possible implementations of the second aspect, perform the method in any one of the third aspect or the possible implementations of the third aspect, or perform the method in any one of the fourth aspect or the possible implementations of the fourth aspect.

According to a thirteenth aspect, a computer-readable storage medium is provided. The computer-readable storage medium stores a computer program. When the computer program is executed, the method in any one of the first aspect or the possible implementations of the first aspect, the method in any one of the second aspect or the possible implementations of the second aspect, the method in any one of the third aspect or the possible implementations of the third aspect, or the method in any one of the fourth aspect or the possible implementations of the fourth aspect is performed.

According to a fourteenth aspect, a chip system is provided. The chip system includes a processor that is used by a communication apparatus to implement functions in the foregoing aspects, for example, generate, receive, send, or process data and/or information in the foregoing methods. In a possible design, the chip system further includes a memory. The memory is configured to store program instructions and data that are necessary for the communication apparatus. The chip system may include a chip, or may include a chip and another discrete component.

According to a fifteenth aspect, a communication system is provided. The communication system includes an access network device that has functions of implementing the method and the possible designs in the first aspect, an access network device that has functions of implementing the method and the possible designs in the second aspect, and an access network device that has functions of implementing the method and the possible designs in the third aspect.

### BRIEF DESCRIPTION OF DRAWINGS

FIG. 1 is a diagram of a network architecture to which this application is applied;
FIG. 2 is a schematic flowchart of a measurement configuration method according to this application;
FIG. 3 is a schematic flowchart of a measurement configuration method according to this application;
FIG. 4 is a schematic flowchart of a measurement configuration method according to this application;
FIG. 5 is a schematic flowchart of a measurement configuration method according to this application;
FIG. 6 is a schematic flowchart of a measurement configuration method according to this application;
FIG. 7 is a schematic flowchart of a measurement configuration method according to this application;
FIG. 8 is a schematic flowchart of a measurement configuration method according to this application;
FIG. 9 is a schematic flowchart of a measurement configuration method according to this application;
FIG. 10 is a schematic flowchart of a measurement configuration method according to this application;
FIG. 11 is a schematic flowchart of a measurement configuration method according to this application;
FIG. 12 is a block diagram of a communication apparatus according to this application; and
FIG. 13 is a block diagram of a communication apparatus according to this application.

### DESCRIPTION OF EMBODIMENTS

The following describes technical solutions of this application with reference to the accompanying drawings.

The technical solutions in embodiments of this application may be applied to various communication systems, for example, a global system for mobile communications (global system for mobile communications, GSM) system, a code division multiple access (code division multiple access, CDMA) system, a wideband code division multiple access (wideband code division multiple access, WCDMA) system, a general packet radio service (general packet radio service, GPRS), a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5th generation (5th generation, 5G) system, or a new radio (new radio, NR) system. In addition, the technical solutions are further applicable to a subsequent evolved system, for example, a 6th generation 6G communication system or even a more advanced 7th generation 7G communication system.

A terminal device in embodiments of this application may alternatively be referred to as user equipment (user equipment, UE), a mobile station (mobile station, MS), a mobile terminal (mobile terminal, MT), an access terminal, a subscriber unit, a subscriber station, a mobile station, a remote station, a remote terminal, a mobile device, a user terminal, a terminal, a wireless communication device, a user agent, a user apparatus, or the like.

The first terminal device may be a wireless terminal or a wired terminal. The wireless terminal may refer to a device that provides a user with voice and/or other service data connectivity, a handheld device with a wireless connection function, or another processing device connected to a wireless modem. A wireless terminal may communicate with one or more core networks through a radio access network (Radio Access Network, RAN). The wireless terminal may be a mobile terminal, such as a mobile phone (or referred to as a "cellular" phone) or a computer equipped with a mobile terminal. For example, the wireless terminal may be a portable, pocket-sized, handheld, computer-embedded, or vehicle-mounted mobile apparatus, which exchanges signaling and/or data with the radio access network. For example, the wireless terminal may be a device, such as a personal communication service (Personal Communication Service, PCS) phone, a cordless phone, a session initiation protocol (Session Initiation Protocol, SIP) phone, a wireless local loop (Wireless Local Loop, WLL) station, or a personal digital assistant (Personal Digital Assistant, PDA). The terminal device in this application includes, for example, a mobile internet device (mobile internet device, MID), a wearable device, a virtual reality (virtual reality, VR) device, an augmented reality (augmented reality, AR) device, a terminal device in an internet of things (internet of things, IoT) system, a wireless terminal in industrial control (industrial control), a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a vehicle-mounted device, a wearable device, a terminal device in a 5G network, a terminal device in a future evolved public land mobile network (public land mobile network, PLMN), or the like. This is not limited in embodiments of this application.

If the various terminal devices described above are located in a vehicle (for example, placed in the vehicle or mounted in the vehicle), the terminal devices may be all considered as vehicle-mounted terminal devices. For example, the vehicle-mounted terminal devices are also referred to as on-board units (on-board unit, OBU).

In embodiments of this application, the first terminal device may further include a relay (relay). Alternatively, it is understood that, any device that can perform data communication with a base station may be considered as the terminal device.

An access network device in embodiments of this application may be a device configured to communicate with the terminal device, may be a base station, an access point, or a network device, or may be a device that communicates with the wireless terminal over an air interface in an access network through one or more sectors. For example, the access network device may be a base station (Base Transceiver Station, BTS) in global system for mobile communications (global system for mobile communications, GSM) or code division multiple access (Code Division Multiple Access, CDMA), or may be a base station (NodeB, NB) in wideband code division multiple access (Wideband Code Division Multiple Access, WCDMA), or may be an evolved base station (evolved NodeB, eNB or eNodeB) in an LTE system, or may be a gNB in a new radio (new radio, NR) system, or may be a transmission reception point (transmission reception point, TRP), or may be a radio controller in a cloud radio access network (cloud radio access network, CRAN) scenario. Alternatively, the access device may be a relay station, an access point, a vehicle-mounted device, a wearable device, an access device in a 5G network, a network device in a future evolved PLMN network, or the like. This is not limited in embodiments of this application.

The access network device serves a cell. The terminal device communicates with the access network device on a transmission resource (for example, a frequency domain resource, or a frequency spectrum resource) used for the cell. The cell may be a cell corresponding to the access network device (for example, a base station). The cell may belong to a macro base station, or a base station corresponding to a small cell (small cell). The small cell herein may include a metro cell (metro cell), a micro cell (micro cell), a pico cell (pico cell), a femto cell (femto cell), or the like. These small cells have features of small coverage and low transmit power, and are applicable to providing a high-speed data transmission service.

In addition, in a network structure, the access network device may include a central unit (central unit, CU) node or a distributed unit (distributed unit, DU) node. The CU and the DU may be logically separated, or may be separately deployed. The access network device including the CU node and the DU node splits protocol layers of an eNB in a long term evolution (long term evolution, LTE) system. Functions of some protocol layers are centrally controlled by the CU, and functions of some or all of remaining protocol layers are distributed in the DU. The CU centrally controls the DU.

To clearly understand embodiments of this application, some technologies in this application are first described.

A streaming class service is a real-time one-way transmission service. A typical streaming class service is that people enjoy audio or video programs on the network. The streaming class service does not require real-time interaction, and a local buffer is usually set to maintain service continuity for a specific period of time. Therefore, the streaming class service is less sensitive to a delay parameter than a session class service.

For some streaming class services or voice services, such as a streaming service (streaming service) and a multimedia telephony service for IP multimedia system (multimedia telephony service for IP multimedia subsystem, MTSI), signal quality alone cannot reflect user experience of using these services by a user. An operator needs to learn about user experience, to better optimize the network and improve user experience. This type of measurement collection is referred to as quality of experience (quality of experience, QoE) measurement collection, or may be referred to as application layer measurement collection.

A unicast (unicast) service means that a service data packet received by an access network device from a core network is for a specific terminal device. The access network device sends the data packet to the specific terminal device. The unicast service is transmitted to the terminal device through a unicast session.

A multicast service means that a same service and same content data are simultaneously provided for some terminal devices, and these terminal devices may form one terminal device group. For example, one piece of data provided by the core network is for a plurality of terminal devices. The multicast service is transmitted to the terminal device through a multicast session (multicast session). For the multicast service, the access network device may configure point-to-point (point-to-point, PTP) transmission/point-to-multipoint (point-to-multipoint, PTM) transmission.

The PTP transmission means that the access network device copies data corresponding to the multicast service and sends the data to each terminal device, and schedules each terminal device to receive the data through a physical downlink control channel (physical downlink control channel, PDCCH) scrambled by using a cell radio network temporary identifier (cell radio network temporary identifier, C-RNTI) corresponding to each terminal device. Different terminal devices receive the data through physical downlink shared channels (physical downlink shared channels, PDSCHs) indicated by different PDCCHs.

The PTM transmission means that the access network device sends data corresponding to the multicast service to all corresponding terminal devices, and schedules these terminal device to receive the data through a PDCCH scrambled by using a group-common RNTI (group-common RNTI) corresponding to each terminal device (these terminal devices receive the data through a PDSCH indicated by a same PDCCH). The access network device may further configure both the PTP transmission and the PTM transmission for a multicast service, and the access network device determines whether the PTP transmission or the PTM transmission is used for a piece of data.

The multicast service may be a multicast (multicast) service in a multicast/broadcast service (multicast/broadcast service, MBS), or may be another multicast service. This is not limited in this application.

Currently, QoE measurement on the multicast service is not implemented. Therefore, for the multicast service, a network side such as the access network device or an operations, administration and maintenance (operations, administration and maintenance, OAM) device does not know user experience, and cannot optimize the network based on user experience, causing problems such as unstable quality of the multicast service and poor communication quality of the multicast service.

This application provides a measurement configuration method, to implement the QoE measurement on the multicast service, so that the network side such as the access network device or the OAM device optimizes the network based on a QoE measurement result of the multicast service, to improve the communication quality of the multicast service.

The following describes an application scenario of this application.

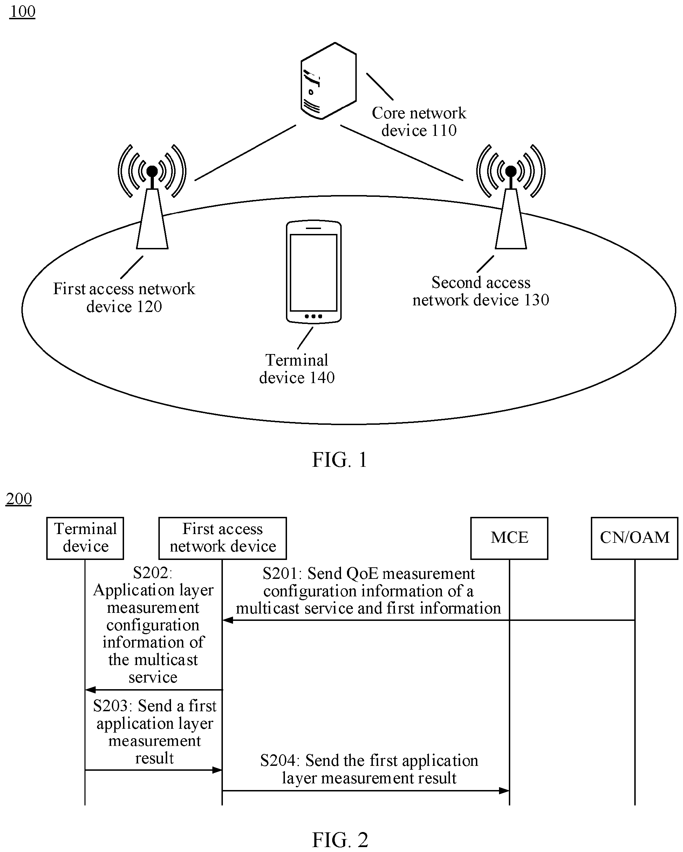

FIG. 1 is a diagram of a network architecture to which this application is applied. FIG. 1 includes a core network device 110, a first access network device 120, a second access network device 130, and a terminal device 140. For example, the first access network device 120 and the second access network device 130 operate in an NR system, or operate in another next generation communication system or another communication system. The first access network device 120 and the second access network device 130 may separately communicate with the terminal device 140 through a Uu interface. In embodiments of this application, one access network device may serve a plurality of terminal devices. FIG. 1 uses only one of the plurality of terminal devices as an example.

The access network device in FIG. 1 is, for example, a base station. The access network device corresponds to different devices in different systems. For example, the access network device may correspond to an eNB in a 4G system, and correspond to a gNB in the NR system. Technical solutions provided in embodiments of this application may also be applied to a future mobile communication system. Therefore, the access network device in FIG. 1 may also correspond to an access network device in the future mobile communication system. In FIG. 1, an example in which the access network device is a base station is used. Actually, with reference to the foregoing descriptions, the access network device may alternatively be a device such as an RSU.

The core network device in FIG. 1 is a device in a core network (core network, CN) that provides service support for a terminal. The core network device is, for example, an access and mobility management function (access and mobility management function, AMF) entity, a session management function (session management function, SMF) entity, a user plane function (user plane function, UPF) entity, or a policy control function (policy control function, PCF) entity. Examples are not listed one by one herein. The AMF entity may be responsible for access management and mobility management of the terminal. The SMF entity may be responsible for session management, for example, session establishment of a user. The UPF entity may be a functional entity on a user plane, and is mainly responsible for a connection to an external network. It should be noted that, an entity in this application may also be referred to as a network element or a functional entity. It should be further understood that, the entities in the core network may operate independently, or may be combined together to implement some control functions. For example, the AMF, the SMF, and the PCF may be combined together as a management device.

In FIG. 1, after accessing the first access network device 120, the terminal device 140 may be handed over to the second access network device 130. This process is referred to as cell handover (handover). In the cell handover process, the first access network device 120 configures the terminal device 140 by using a radio resource management (Radio Resource Management, RRM) measurement configuration and based on a feedback of the terminal device 140. A measurement report is triggered when an RRM measurement result meets a specific condition. After receiving the measurement report of the terminal device 140, the first access network device 120 may send a handover command to the terminal device 140, to indicate the terminal device 140 to be handed over from the first access network device 120 to the second access network device 130. In an RRC connected state (connected state), there is an RRC connection between the terminal device 140 and the first access network device 120, and the first access network device 120 configures, by using RRC signaling, the terminal to perform intra-frequency, inter-frequency, and/or inter-system neighboring cell measurement. The terminal device 140 reports the measurement result to the first access network device 120 by using the RRC signaling, and then the first access network device 120 hands over, based on the measurement result, the terminal device 140 to the second access network device 130 with better signal quality.

It should be understood that, a communication system shown in FIG. 1 may further include more communication devices, for example, another terminal device or access network device. An access network device or a terminal device included in the communication system shown in FIG. 1 may be the foregoing access network devices or terminal devices in various forms. The communication devices are not shown one by one in the figure in embodiments of this application.

In embodiments of this application, the method is described by using an example in which the access network device and the terminal device are used as execution entities that perform the method. By way of example and not limitation, the execution entities that perform the method may alternatively be chips, chip systems, processors, or the like used in the terminal device and the access network device.

FIG. 2 is a schematic flowchart of a measurement configuration method 200 according to this application. The method 200 may be applied to the foregoing application scenario, and certainly may also be applied to another communication scenario. This is not limited in this application.

As shown in FIG. 2, the method 200 shown in FIG. 2 may include S201 to S209. The following describes the steps in the method 200 in detail with reference to FIG. 2.

S201: A CN or an OAM device sends QoE measurement configuration information of a multicast service and first information to a first access network device. The first information includes first indication information, and the first indication information indicates that a terminal device uses the QoE measurement configuration information of the multicast service when the terminal device changes from receiving the multicast service to receiving a unicast service. The first information is related to QoE measurement on the unicast service, and the multicast service corresponds to the unicast service. The multicast service corresponds to the unicast service, which means that the multicast service and the unicast service are a same data service, and the access network device sends data of the data service to the terminal device in a unicast or multicast manner. The first access network device supports the multicast service.

Correspondingly, the first access network device receives the QoE measurement configuration information of the multicast service and the first information.

It should be noted that, the first indication information indicates that the terminal device uses the QoE measurement configuration information of the multicast service when the terminal device changes from receiving the multicast service to receiving the unicast service, which means that when the terminal device changes from receiving the multicast service to receiving the unicast service corresponding to the multicast service, the terminal device continues to perform application layer measurement by using the QoE measurement configuration information of the multicast service.

It should be understood that, the QoE measurement configuration information of the multicast service includes an application layer measurement configuration information of the multicast service. Table 1 is an example of the QoE measurement configuration information of the multicast service.

**Table 1 QoE measurement configuration information**

| Information element/Group name | Information element type and reference | Semantic description |
|---|---|---|
| QoE reference | Byte string (six bytes) | The QoE reference includes an MCC ID, an MNC ID, and a QMC ID |

| Service type | Enumerated service type | Indicates a service type of QoE measurement. |
|---|---|---|
| IP address of a measurement collection entity | Transport layer address | Address of an entity for collecting a QoE measurement report |
| Application layer measurement configuration container | | |
| List of slices supported by QoE measurement collection | | |
| RAN-visible QoE measurement amount or measurement indicator | | |

It should be understood that, Table 1 shows only some elements of the QoE measurement configuration information of the multicast service. The QoE measurement configuration information of the multicast service further includes another element, for example, an element such as a range of the QoE measurement collection. For details, refer to QoE measurement configuration information of the unicast service. Details are not described herein again.

The QoE measurement configuration information further includes the QoE reference (reference) and the IP address of the measurement collection entity (measurement collection entity, MCE), and the MCE is configured to collect an application layer measurement result. The QoE reference is used to identify QoE measurement requested by a network (or used to identify a QoE measurement collection task on the access network device and the measurement collection entity), and the QoE reference may be referred to as a QoE measurement identifier. The QoE reference is a globally unique identifier. For example, the QoE reference includes a public land mobile network (Public land mobile network, PLMN) and a QoE measurement collection identifier. The PLMN is identified by a mobile country code (mobile country code, MCC) and a mobile network code (mobile network code, MNC), and the QoE measurement collection identifier is allocated by a management system or an operator.

The IP address of the MCE is used by the access network device to send the application layer measurement result to the MCE after the access network device receives the application layer measurement result reported by the terminal device.

The QoE measurement configuration information includes one container (container). The container includes an application layer measurement configuration, and the container may also be referred to as an application layer measurement configuration container. The CN notifies QoE measurement configuration information for a specific terminal device. For example, the QoE measurement configuration information is sent via an interface message that is between the first access network device and the CN and that is for a first terminal device.

The application layer measurement configuration carried in a form of the container may also be referred to as an access network device-invisible application layer measurement configuration. The container includes an application layer measurement amount.

The application layer measurement amount may include one or more of the following parameters:
an average throughput, an initial playout delay, a buffer level, a playout delay, deterioration duration, a quantity of consecutive lost packets, jitter duration, out-of-synchronization duration, a round-trip delay, an average bit rate, and frame freezing.

The QoE measurement configuration information of the multicast service includes an identifier of the QoE measurement configuration information of the multicast service. For example, the identifier is the QoE reference.

In an implementation, the first information further includes a service type of the multicast service and a service type of the unicast service.

Specifically, if the service type of the multicast service is a newly defined service type, to be specific, the service type of the multicast service is different from a service type (for example, a streaming service, a virtual reality (virtual reality, VR) service, or a multimedia telephony service for IP multimedia subsystem (Multimedia Telephony Service for IP multimedia subsystem, MTSI)) of an existing unicast service, the QoE measurement configuration information that is of the multicast service and that is sent by the CN or the OAM to the first access network device further includes the service type of the multicast service and the service type of the unicast service. The service type of the multicast service corresponds to the service type of the unicast service. For example, a service type A of the multicast service corresponds to a service type B of the unicast service.

In an implementation, the first information may also include index information of the service type of the multicast service and index information of the service type of the unicast service.

Specifically, the first information may not directly include the service type of the multicast service and the service type of the unicast service, but include the index information of the service type of the multicast service and the index information of the service type of the unicast service. In this way, signaling overheads can be reduced. For example, the index information of the service type of the multicast service is 1, the index information of the service type of the unicast service is 2, and there is a correspondence between the index information and the service type. The first access network device may determine the service type of the multicast service based on the index information 1. The first access network device may determine the service type of the unicast service based on the index information 2.

In an implementation, the QoE measurement configuration information of the multicast service further includes a session (session) identifier (identifier, ID) of the multicast service, and the session identifier of the multicast service is used to identify a multicast session on which application layer measurement is to be performed. In another implementation, when the QoE measurement configuration information of the multicast service does not include the session identifier of the multicast service, QoE measurement may be performed on all sessions of the multicast service by default.

For example, a multicast session ID includes a temporary mobile group identity (temporary mobile group identity, TMGI), and the TMGI is used to uniquely identify an MBS service. The multicast session ID may further include a network identifier (network identifier, NID), and the NID is used to identify an independent non-public network.

In an implementation, the application layer measurement configuration in the QoE measurement configuration information of the multicast service may be sent to the first access network device in a form of the container, or may be sent to the first access network device in a form that can be sensed by the access network device, for example, may be sent to the first access network device in a form of an information element.

For example, the multicast session ID may be included in the application layer measurement configuration container, or may be included outside the application layer measurement configuration container, or may be included both in the application layer measurement configuration container and outside the application layer measurement configuration container.

In an implementation, the first information may alternatively be included in the QoE measurement configuration information of the multicast service.

S202: The first access network device determines application layer measurement configuration information of the multicast service based on the QoE measurement configuration information of the multicast service and the first information, and the first access network device sends the application layer measurement configuration information of the multicast service to the terminal device.

Correspondingly, the terminal device receives the application layer measurement configuration information of the multicast service that is from the first access network device.

In an implementation, the application layer measurement configuration information of the multicast service includes second indication information. The second indication information indicates that the terminal device uses the application layer measurement configuration information of the multicast service when the terminal device changes from receiving the multicast service to receiving the unicast service. It should be noted that, the second indication information indicates that the terminal device uses the application layer measurement configuration information of the multicast service when the terminal device changes from receiving the multicast service to receiving the unicast service, which means that when the terminal device changes from receiving the multicast service to receiving the unicast service corresponding to the multicast service, the terminal device continues to perform application layer measurement by using the application layer measurement configuration information of the multicast service.

For example, the application layer measurement configuration information of the multicast service further includes an application layer measurement identifier of the multicast service and/or an application layer measurement identifier of the unicast service, and the application layer measurement identifier indicates an application layer measurement task of the terminal device. **In** an implementation, if the application layer measurement identifier of the multicast service is the same as the application layer measurement identifier of the unicast service, the application layer measurement configuration information of the multicast service may include one application layer measurement identifier, and may be the application layer measurement identifier of the multicast service or the application layer measurement identifier of the unicast service. **In** another implementation, if the application layer measurement identifier of the multicast service is different from the application layer measurement identifier of the unicast service, the application layer measurement configuration information of the multicast service may include two application layer measurement identifiers, namely, the application layer measurement identifier of the multicast service and the application layer measurement identifier of the unicast service.

Application layer measurement identifiers corresponding to different application layer measurement tasks of a same terminal device are different. Application layer measurement identifiers corresponding to application layer measurement tasks of different terminal devices may be the same or may be different.

The application layer measurement identifier is generated by the first access network device for the terminal device. The application layer measurement identifier corresponds to one piece of application layer measurement configuration information configured by the first access network device for the terminal device. Generally, the application layer measurement identifier corresponds to the QoE reference. The first access network device stores a correspondence between the application layer measurement identifier and the QoE reference.

**In** an implementation, the application layer measurement configuration information of the multicast service further includes the service type of the multicast service and the service type of the unicast service.

Specifically, if the service type of the multicast service is a newly defined service type, to be specific, the service type of the multicast service is different from the service type of the existing unicast service, the application layer measurement configuration information of the multicast service further includes the index information of the service type of the multicast service and the index information of the service type of the unicast service. In other words, the application layer measurement configuration information of the multicast service includes a correspondence between the service type of the multicast service and the service type of the unicast service. For example, the service type A of the multicast service corresponds to the service type B of the unicast service. In another implementation, if the service type of the multicast service is not a newly defined service type, to be specific, the service type of the multicast service is the same as the service type of the unicast service, the application layer measurement configuration information of the multicast service needs to include only one service type.

For example, the application layer measurement configuration information of the multicast service further includes the session identifier of the multicast service.

The first access network device may send the application layer measurement configuration information of the multicast service to the terminal device via an RRC message. The RRC message also carries a service type corresponding to the application layer measurement configuration information of the multicast service.

The application layer measurement configuration information may be sent to the terminal device in a form of a container, or the application layer measurement configuration information may be sent to the terminal device in a form of a non-container.

The terminal device receives the application layer measurement configuration information of the multicast service that is from the first access network device. Specifically, an access stratum (Access Stratum, AS) of the terminal device sends, to an upper layer of the AS of the terminal device, the application layer measurement configuration information of the multicast service that is received from the first access network device. The upper layer of the AS of the first terminal device may be an application layer, or may be a layer for QoE measurement.

For example, the AS of the terminal device also sends the application layer measurement identifier to the upper layer of the AS of the terminal device.

For example, the AS of the terminal device sends the foregoing information to the upper layer of the AS in a form of an attention (attention, AT) command (command). For example, the AS of the terminal device sends the application layer measurement configuration to the upper layer of the AS, and may send the application layer measurement configuration by using the AT command and a command application level measurement configuration (command application level measurement configuration, CAPPLEVMC).

S203: The terminal device performs application layer measurement based on the application layer measurement configuration information of the multicast service, to obtain first application layer measurement result information, and the terminal device sends the first application layer measurement result information to the first access network device, where the first application layer measurement result information includes an application layer measurement result of the multicast service, and the first application layer measurement result information includes the application layer measurement identifier of the multicast service.

Correspondingly, the first access network device receives the first application layer measurement result information.

For example, the upper layer of the AS of the terminal device sends the first application layer measurement result information to the AS of the terminal device. The AS of the terminal device sends the first application layer measurement result information to the first access network device.

The upper layer of the AS of the terminal device reports a first application layer measurement result according to a specific rule (for example, the rule is included in the application layer measurement configuration). For example, the upper layer of the AS of the terminal device periodically reports the first application layer measurement result. For example, the first terminal device may report the first application layer measurement result after a session ends, and the session is a session that carries the multicast service corresponding to the first application layer measurement result information.

When the upper layer of the AS of the terminal device needs to report the first application layer measurement result based on the application layer measurement configuration, the upper layer of the AS of the terminal device sends the first application layer measurement result to the AS of the terminal device. The first application layer measurement result may be reported in a form of the container. The application layer measurement result carried in a form of the container may also be referred to as a RAN-invisible application layer measurement result.

Optionally, the first application layer measurement result information includes the session identifier of the multicast service.

In a possible implementation, the session identifier of the multicast service that is included in the first application layer measurement result information is the session identifier of the multicast service that is included in the QoE measurement configuration information of the multicast service. For example, when the QoE measurement configuration information of the multicast service that is sent by the first access network device to the terminal device includes the session identifier of the multicast service, the terminal device determines, based on the session identifier of the multicast service, a session of the multicast service on which application layer measurement is to be performed, and performs application layer measurement on the determined session of the multicast service, to obtain the application layer measurement result. When feeding back the application layer measurement result to the first network access device, the terminal device carries the session identifier of the multicast service corresponding to the application layer measurement result.

In a possible implementation, if the QoE measurement configuration information of the multicast service does not include the session identifier of the multicast service, the terminal device performs application layer measurement on all ongoing sessions of the multicast service by default, to obtain application layer measurement results. The terminal device feeds back, to the first access network device, the application layer measurement results corresponding to all the sessions of the multicast services and identifiers of these sessions of the multicast service.

For example, the first application layer measurement result information further includes an identifier of a network slice, and the identifier of the network slice indicates a network slice corresponding to the multicast service.

For example, the first application layer measurement result information includes the application layer measurement result carried in a form of the container. Optionally, the identifier of the network slice and the session identifier of the multicast service are included in the application layer measurement result.

S204: The first access network device sends the first application layer measurement result information to the MCE.

Correspondingly, the MCE receives the first application layer measurement result information from the first access network device.

The first access network device obtains, based on the stored correspondence between the application layer measurement identifier of the multicast service and the QoE reference and the application layer measurement identifier of the multicast service that is reported by the terminal device, QoE reference corresponding to the application layer measurement result. Then, the first access network device finds the IP address of the corresponding MCE based on the QoE reference, and then sends the first application layer measurement result information to the MCE. Alternatively, the first access network device obtains the corresponding application layer measurement configuration information of the multicast service based on the application layer measurement identifier of the multicast service that is reported by the terminal device, and then obtains, based on the QoE measurement configuration information delivered by the CN or the OAM, the IP address of the MCE corresponding to the first application layer measurement result, to send the application layer measurement result to the MCE.

Optionally, the first access network device sends only a part of the first application layer measurement result information to the MCE. For example, the first access network device sends the application layer measurement result (the application layer measurement result in a form of the container) in the first application layer measurement result information to the MCE. The first access network device further sends the identifier of the QoE measurement configuration information of the multicast service to the MCE.

For example, the first access network device may not send information such as the application layer measurement identifier of the multicast service, the session identifier of the multicast service, and the identifier of the network slice to the MCE.

The first access network device sends the application layer measurement configuration information of the multicast service to the terminal device, where the application layer measurement configuration information of the multicast service is determined with reference to the first information related to the unicast service, and the information about the unicast service corresponding to the multicast service is also considered when QoE measurement on the multicast service is implemented. The terminal device no longer needs to receive application layer measurement configuration information of the unicast service. The terminal device performs measurement based on application layer measurement configuration information of a first multicast service, and reports the first application layer measurement result information to the first access network device. The first access network device sends the first application layer measurement result information to the MCE. The network side such as the OAM may optimize the network based on the first application measurement result information, to improve a performance parameter of the multicast service, so as to improve communication quality of the multicast service.

In an implementation, when the terminal device is handed over from the first access network device to a second access network device, this embodiment further includes the following step S205 to step S209.

The first access network device supports the multicast service, and the second access network device does not support the multicast service. The first access network device is a source access network device, and the second access network device is a target access network device. When the terminal device is handed over from the source access network device to the target access network device, service types supported by the source access network device and the target access network device are different, and the network side needs to process service data. There are two processing manners:
Manner 1: Before the handover, the source access network device establishes a data radio bearer (data radio bearer, DRB) of the unicast service for the terminal device. In this way, before the handover, the source access network device has established the DRB of the unicast service for the terminal device, so that when the terminal device is handed over between the source access network device and the target access network device, a processing manner used when the unicast service is handed over between the two access network devices may be used. The processing manner includes: The source access network device transmits a data packet corresponding to the DRB to the target access network device. The target access network device only needs to establish the DRB of the unicast service for the terminal device. It should be noted that, for the unicast service, an RB that is established by the access network device for the terminal device and that is used to transmit the unicast service is the DRB; and for the multicast service, an RB that is established by the access network device for the terminal device and that is used to transmit a multicast/broadcast service is a multicast broadcast service radio bearer (MBS radio bearer, MRB).
Manner 2: The target access network device performs full configuration. In other words, the target access network device generates a radio resource control (Radio Resource Control, RRC) message, where the RRC message carries a full configuration (full configuration) indication. The target access network device sends the RRC message to the source access network device, and then the source access network device sends the RRC message to the terminal device. After the terminal device receives the RRC message carrying a full configuration indication, the terminal device deletes all AS-side related configurations, and reconfigures AS-side related information based on the configuration information carried in the RRC message, for example, configures the AS side based on configuration information of the DRB configured by the target access network device.

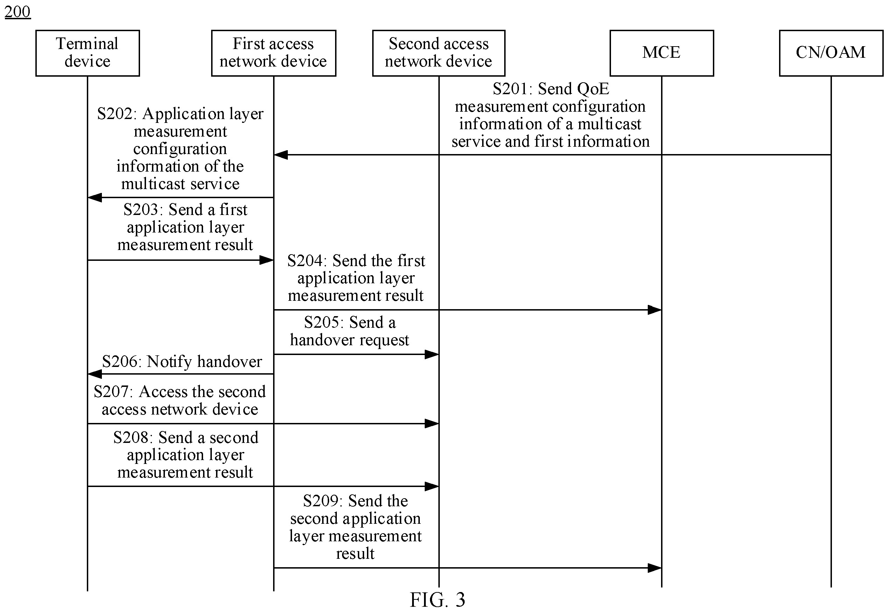

The foregoing briefly describes how to process the data service when the terminal device is handed over from the first access network device to the second access network device. The following describes how the terminal device performs application layer measurement when the terminal device is handed over from the first access network device to the second access network device. FIG. 3 is a schematic flowchart of a measurement configuration method 200 according to this application. The following describes step S205 to step S209 in detail with reference to FIG. 3.

S205: The first access network device sends a handover request to the second access network device, where the handover request includes an identifier of the QoE measurement configuration information of the unicast service and the application layer measurement identifier of the unicast service. The first access network device is the source access network device, and the second access network device is the target access network device. The second access network device does not support the multicast service, the identifier of the QoE measurement configuration information of the unicast service and the application layer measurement identifier of the unicast service are determined by the first access network device, and the identifier of the QoE measurement configuration information of the unicast service corresponds to the identifier of the QoE measurement configuration information of the multicast service. Correspondingly, the second access network device responds to the handover request.

Specifically, the second access network device supports the unicast service but does not support the multicast service. The first access network device determines the identifier of the QoE measurement configuration information of the unicast service based on the identifier of the QoE measurement configuration information of the multicast service. For example, the identifier of the QoE measurement configuration information of the multicast service is the same as the identifier of the QoE measurement configuration information of the unicast service. For another example, the QoE measurement configuration information of the multicast service includes a correspondence between the identifier of the QoE measurement configuration information of the multicast service and the identifier of the QoE measurement configuration information of the unicast service, so that the second access network device can learn of the identifier of the QoE measurement configuration information of the unicast service. The first access network device determines an application layer measurement identifier of the unicast service based on an application layer measurement identifier of the multicast service. For example, the application layer measurement identifier of the multicast service is the same as the application layer measurement identifier of the unicast service. The handover request includes the application layer measurement identifier of the unicast service, so that the second access network device can obtain an identifier of the QoE measurement configuration information that corresponds to a second application layer measurement result and that is reported by the terminal device.

For example, when the first access network device determines that the terminal device is handed over to the second access network device, the first access network device may first reconfigure the terminal device from receiving the multicast service to receiving the unicast service, and then the terminal device is handed over from the first access network device to the second access network device.

Optionally, the first access network device may directly send the handover request to the second access network device, or the first access network device may send the handover request to the second access network device through the core network.

Optionally, the handover request includes the service type of the unicast service. The second access network device learns of a corresponding measured service type based on the service type of the unicast service, so that the second access network device may perform some processing based on the service type in subsequent processing. For example, when load on a wireless side of the second access network device is high, the second access network device may determine a priority of each piece of application layer measurement based on a service type of each piece of application layer measurement, so that measurement reporting of application layer measurement with a low priority may be suspended or application layer measurement with a low priority may be canceled.

Specifically, if a service type of QoE measurement on the multicast service is a newly defined service type, to be specific, the service type of the QoE measurement on the multicast service is different from a service type (for example, Streaming, VR, or MTSI) of QoE measurement corresponding to the unicast service, the first access network device sends the service type of the QoE measurement on the unicast service to the second access network device based on a relationship between the service type of the multicast service and the service type of the unicast service in the QoE measurement configuration information, where the service type of the QoE measurement on the unicast service is the service type of the unicast service.

S206: The first access network device notifies the terminal device to be handed over to the second access network device.

S207: The terminal device accesses the second access network device.

S208: The terminal device sends second application layer measurement result information to the second access network device.

Specifically, the terminal device continues to perform measurement based on the application layer measurement configuration information of the multicast service that is sent by the first access network device, and sends the second application layer measurement result information to the second access network device. The second application layer measurement result information includes an application layer measurement result of the unicast service, and the second application layer measurement result information includes the application layer measurement identifier of the unicast service.

Correspondingly, the second access network device receives the second application layer measurement result information.

Specifically, the second application layer measurement result information includes the application layer measurement identifier of the unicast service, and the measurement identifier of the unicast service is delivered by the first access network device in the application layer measurement configuration information of the multicast service. For understanding of the application layer measurement identifier of the unicast service, refer to corresponding descriptions in step S202.

Optionally, the second application layer measurement result information carries the application layer measurement result of the unicast service in a form of the container.

For example, the upper layer of the AS of the terminal device sends the second application layer measurement result information to the AS of the terminal device. The AS of the terminal device sends the second application layer measurement result information to the second access network device.

In an implementation, the second application layer measurement result information includes the session identifier of the multicast service. Optionally, the second application layer measurement result information further includes the identifier of the network slice corresponding to the session identifier of the multicast service.

Optionally, the identifier of the network slice and the session identifier of the multicast service are included in the application layer measurement result.

Specifically, regardless of whether an access network device currently accessed by the terminal device supports the multicast service, the terminal device reports the application layer measurement result only in a receiving manner used when the application layer measurement is initially configured. To be specific, when the terminal device initially receives the application layer measurement result of the multicast service in a multicast manner, all application layer measurement results subsequently reported by the terminal device carry the session identifier of the multicast service.

Optionally, when reporting the application layer measurement result information to the access network device, the first terminal device may further report a current service receiving manner, that is, whether to receive a service in a unicast manner or a multicast manner.

In another implementation, the second application layer measurement result information includes the identifier of the network slice, and does not include the session identifier of the multicast service.

For example, the identifier of the network slice is included in the application layer measurement result.

Specifically, the upper layer of the AS of the terminal device can learn that the AS of the terminal device changes from receiving the service in the multicast manner to receiving the service in the unicast manner. In this case, the upper layer of the AS of the terminal device includes only the identifier of the network slice in a subsequently generated application layer measurement result, and does not include the session identifier of the multicast service.

S209: The second access network device sends the second application layer measurement result information to the MCE. Correspondingly, the MCE receives the second application layer measurement result information from the second access network device.

The second access network device further sends the identifier of the QoE measurement configuration information of the unicast service to the MCE.

For example, the second application layer measurement result includes third indication information. The third indication information indicates whether the current terminal device receives the service in the unicast manner or the multicast manner.

For example, the second access network device sends only a part of the second application layer measurement result information to the MCE. For example, the second access network device sends the application layer measurement result (the application layer measurement result in a form of the container) in the second application layer measurement result information to the MCE.

When the terminal device is handed over from the first access network device that supports the multicast service to the second access network device that does not support the multicast service, the terminal device still performs measurement by using the application layer measurement configuration information of the multicast service that is configured by the first access network device, and the second access network device does not need to deliver, to the terminal device again, the application layer measurement configuration information of the unicast service corresponding to the multicast service, so that signaling overheads can be reduced. The second access network device sends the second application layer measurement result information to the MCE. The second application layer measurement result information is application layer measurement information of the unicast service. Further, the OAM may obtain the application layer measurement information of the unicast service and optimize performance of the unicast service, to improve communication quality of the unicast service.

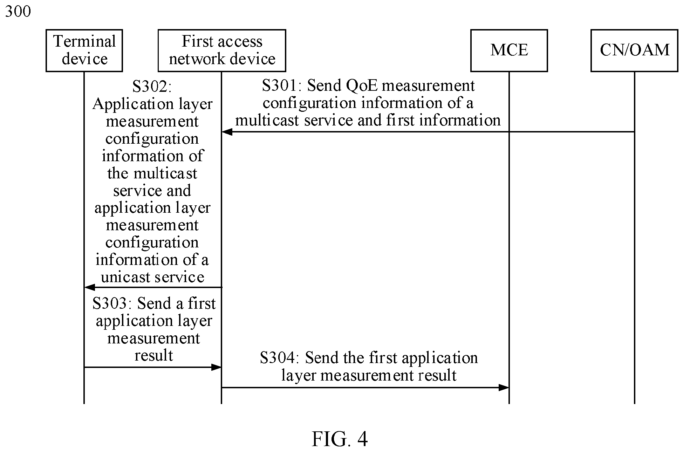

FIG. 4 is a schematic flowchart of a measurement configuration method 300 according to this application. The method 300 is different from the method 200. In the method 200, the first access network device receives the QoE measurement configuration information of the multicast service and the first indication information, and the first indication information indicates that the terminal device uses the QoE measurement configuration information of the multicast service when the terminal device changes from receiving the multicast service to receiving the unicast service. The first access network device sends the application layer measurement configuration information of the multicast service to the terminal device, where the application layer measurement configuration information of the multicast service includes the second indication information, and the second indication information indicates that the terminal device uses the application layer measurement configuration information of the multicast service when the terminal device changes from receiving the multicast service to receiving the unicast service. However, in the method 300, the first access network device receives the QoE measurement configuration information of the multicast service and the QoE measurement configuration information of the unicast service, and the first access network device sends the application layer measurement configuration information of the multicast service and the application layer measurement configuration information of the corresponding unicast service to the terminal device based on the QoE measurement configuration information of the multicast service and the QoE measurement configuration information of the unicast service.

The method 300 may be applied to the foregoing application scenario, and certainly may also be applied to another communication scenario. This is not limited in this application.

As shown in FIG. 4, the method 300 shown in FIG. 4 may include S301 to S309. The following describes the steps in the method 300 in detail with reference to FIG. 4.

S301: A CN or an OAM sends QoE measurement configuration information of a multicast service and first information to a first access network device. The first information includes QoE measurement configuration information of a unicast service, the multicast service corresponds to the unicast service, and the first access network device supports the multicast service. For understanding that the multicast service corresponds to the unicast service, refer to the descriptions in the foregoing method S201.

Correspondingly, the first access network device receives the QoE measurement configuration information of the multicast service and the first information.

Specifically, for the QoE measurement configuration information of the multicast service, the CN or the OAM further sends, to the first access network device, the QoE measurement configuration information of the unicast service corresponding to the multicast service, namely, the first information.

It should be understood that, for a correspondence between an identifier of the QoE measurement configuration information of the multicast service and an identifier of the QoE measurement configuration information of the unicast service, refer to the descriptions in S205 in the foregoing method for understanding. It should be noted that, in S305, the first access network device determines the correspondence between the identifier of the QoE measurement configuration information of the multicast service and the identifier of the QoE measurement configuration information of the unicast service. In S301, the CN or the OAM determines the correspondence between the identifier of the QoE measurement configuration information of the multicast service and the identifier of the QoE measurement configuration information of the unicast service.

In an implementation, the first information further includes a service type of the multicast service and a service type of the unicast service.

For example, the first information may further include index information of the service type of the multicast service and index information of the service type of the unicast service.

For example, the QoE measurement configuration information of the multicast service further includes a session identifier of the multicast service, and the session identifier of the multicast service is used to identify a multicast session on which application layer measurement is to be performed.

In an implementation, when the QoE measurement configuration information of the multicast service does not include the session identifier of the multicast service, QoE measurement may be performed by a terminal device on all sessions of the multicast service by default.

Step S301 is similar to step 201. For details, refer to the descriptions of step 201.

S302: The first access network device sends application layer measurement configuration information of the multicast service and application layer measurement configuration information of the corresponding unicast service to the terminal device based on the QoE measurement configuration information of the multicast service and the QoE measurement configuration information of the unicast service.

Correspondingly, the terminal device receives the application layer measurement configuration information of the multicast service and the application layer measurement configuration information of the unicast service that are from the first access network device.

The application layer measurement configuration information of the multicast service includes an application layer measurement identifier of the multicast service. The application layer measurement configuration information of the unicast service also includes an application layer measurement identifier of the unicast service.

For example, the application layer measurement identifier of the multicast service may be the same as the application layer measurement identifier of the unicast service. In this case, the application layer measurement configuration information of the multicast service and the application layer measurement configuration information of the unicast service associated with the multicast service that are sent to the terminal device carry only one application layer measurement identifier.

For example, the application layer measurement identifier of the multicast service and the application layer measurement identifier of the unicast service may be different, and have a correspondence. For example, an application layer measurement identifier 1 of the multicast service corresponds to an application layer measurement identifier 2 of the unicast service.

It should be noted that, an upper layer of an AS of the terminal device performs different application layer measurement configuration information based on different manners of receiving a service currently. If the terminal device currently receives the service in a multicast manner, the terminal device performs application layer measurement based on the application layer measurement configuration information of the multicast service; or otherwise, the terminal device performs application layer measurement based on the application layer measurement configuration information of the unicast service.

When the terminal device accesses the first access network device, the first access network device supports the multicast service, and the terminal device starts the application layer measurement on the multicast service, but does not start the application layer measurement on the unicast service.

S303: The terminal device performs application layer measurement based on the application layer measurement configuration information of the multicast service, to obtain first application layer measurement result information, and the terminal device sends the first application layer measurement result information to the first access network device, where the first application layer measurement result information includes an application layer measurement result of the multicast service, and the first application layer measurement result information includes the application layer measurement identifier of the multicast service. Correspondingly, the first access network device receives the first application layer measurement result information.

For example, the upper layer of the AS of the terminal device sends the first application layer measurement result information to the AS of the terminal device. The AS of the terminal device sends the first application layer measurement result information to the first access network device.

For example, the first application layer measurement result information includes the session identifier of the multicast service and/or an identifier of a network slice, and the identifier of the network slice indicates a network slice of the multicast service.

In an implementation, the first application layer measurement result information includes the application layer measurement result carried in a form of the container. For example, the identifier of the network slice and/or the session identifier of the multicast service are included in the application layer measurement result.

Step S303 may be understood with reference to step S203.

S304: The first access network device sends the first application layer measurement result information to an MCE.

Correspondingly, the MCE receives the first application layer measurement result information from the first access network device.

The first access network device further sends the identifier of the QoE measurement configuration information of the multicast service to the MCE.

Step S304 may be understood with reference to step S204.

The terminal device receives, from the first access network device, the application layer measurement configuration information of the multicast service and the application layer measurement configuration information of the unicast service corresponding to the multicast service, and also considers the information about the unicast service corresponding to the multicast service when implementing QoE measurement on the multicast service. The terminal device no longer needs to receive the application layer measurement configuration information of the unicast service. The terminal device performs application layer measurement based on the application layer measurement configuration information of the multicast service, and reports the first application layer measurement result information to the first access network device. The first access network device sends the first application measurement result information to the MCE. A network side such as the OAM may optimize a network based on the first application layer measurement result information, to improve a performance parameter of the multicast service, so as to improve communication quality of the multicast service.

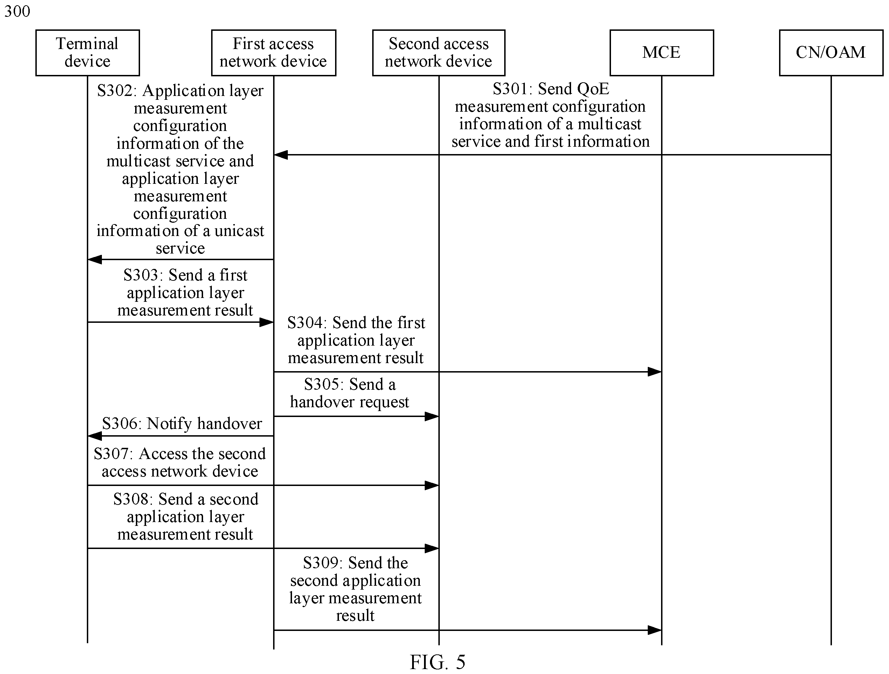

**In** an implementation, when the terminal device is handed over from the first access network device to a second access network device, this embodiment further includes the following step S305 to step S309. FIG. 5 is a schematic flowchart of a measurement configuration method 200 according to this application. The following describes step S305 to step S309 in detail with reference to FIG. 5.

S305: The first access network device sends a handover request to the second access network device, where the handover request includes the identifier of the QoE measurement configuration information of the unicast service and the application layer measurement identifier of the unicast service, and the second access network device does not support a first multicast service. Correspondingly, the second access network device responds to the handover request.

Optionally, the first access network device may directly send the handover request to the second access network device, or the first access network device may send the handover request to the second access network device through the core network.

For example, when the first access network device determines that the terminal device is handed over to the second access network device, the first access network device may first reconfigure the terminal device from receiving the multicast service to receiving the unicast service, and then the terminal device is handed over from the first access network device to the second access network device.

For example, the handover request includes the index information of the service type of the unicast service.

For example, the handover request includes the QoE measurement configuration information of the unicast service.

**In** an implementation, the first access network device sets a starting status of QoE measurement on the unicast service based on a starting status that is of QoE measurement on the multicast service and that is reported by the terminal device. For example, if the QoE measurement on the multicast service is started, the QoE measurement on the corresponding unicast service is set to be started. The handover request sent by the first access network device to the second access network device may carry first indication information, and the first indication information indicate whether the QoE measurement on the unicast service has been started.

S306: The first access network device notifies the terminal device to be handed over to the second access network device.

S307: The terminal device accesses the second access network device.

S308: The terminal device sends second application layer measurement result information to the second access network device.

After the terminal device accesses the second access network device, the second access network device does not support the multicast service, and the terminal device starts the application layer measurement on the unicast service. The terminal device performs application layer measurement based on the application layer measurement configuration information of the unicast service, and sends the second application layer measurement result information to the second access network device. The second application layer measurement result information includes the application layer measurement result of the unicast service, and the second application layer measurement result information includes the application layer measurement identifier of the unicast service. Correspondingly, the second access network device receives the second application layer measurement result information.

In an implementation, the second application layer measurement result information includes the application layer measurement result of the unicast service that is carried in a form of the container.

Specifically, the upper layer of the AS of the terminal device performs application layer measurement based on the application layer measurement configuration information of the unicast service. To be specific, after the terminal device accesses the second access network device, the terminal device starts the application layer measurement on the unicast service.

In an implementation, the second application layer measurement result information includes the session identifier of the multicast service. The second application layer measurement result information may further include the identifier of the network slice corresponding to the session identifier of the multicast service. Optionally, the identifier of the network slice and the session identifier of the multicast service are included in the application layer measurement result of the unicast service that is carried in a form of the container.

Specifically, regardless of whether an access network device currently accessed by the terminal device supports the multicast service, the terminal device reports the application layer measurement result only in a receiving manner used when the application layer measurement is initially configured. To be specific, when the terminal device initially receives the application layer measurement of the multicast service in a multicast manner, all application layer measurement results subsequently reported by the terminal device carry the session identifier of the multicast service.

Optionally, when reporting the application layer measurement result information to the access network device, the first terminal device may further report a current service receiving manner, that is, whether to receive a service in a unicast manner or a multicast manner.

In another implementation, the second application layer measurement result information includes the identifier of the network slice, and does not include the session identifier of the multicast service.

Specifically, the upper layer of the AS of the terminal device can learn that the AS of the terminal device changes from receiving the service in the multicast manner to receiving the service in the unicast manner. In this case, the upper layer of the AS of the terminal device includes only the identifier of the network slice in a subsequently generated application layer measurement result, and does not include the session identifier of the multicast service.

S309: The second access network device sends the second application measurement result information to the MCE.

Correspondingly, the MCE receives the second application layer measurement result information from the second access network device.

The second access network device further sends the identifier of the QoE measurement configuration information of the unicast service to the MCE.

Optionally, the second access network device sends only a part of the second application layer measurement result information to the MCE. For example, the second access network device sends the application layer measurement result in the second application layer measurement result information to the MCE.

Optionally, the second application layer measurement result includes third indication information. The third indication information indicates whether the current terminal device receives, in the unicast manner or the multicast manner, a service of the application layer measurement.

When the terminal device is handed over from the first access network device that supports the multicast service to the second access network device that does not support the multicast service, the terminal device performs measurement by using the application layer measurement configuration information of the unicast service corresponding to the multicast service, to obtain the second application layer measurement result, and the second access network device does not need to deliver, to the terminal device again, the application layer measurement configuration information of the unicast service corresponding to the multicast service, so that signaling overheads can be reduced. The second access network device sends the second application measurement result information to the MCE. The second application layer measurement result information is application layer measurement information of the unicast service. An operator obtains the application layer measurement information of the unicast service from the MCE, and then the operator may optimize performance of the unicast service through the OAM based on the second application layer measurement result information, to improve communication quality of the unicast service.

The application layer measurement described in FIG. 2 and FIG. 3 is invisible to the access network device. The following describes how to perform access network device-visible application layer measurement when the terminal device is handed over from the access network device that supports the multicast service to the access network device that does not support the multicast service.

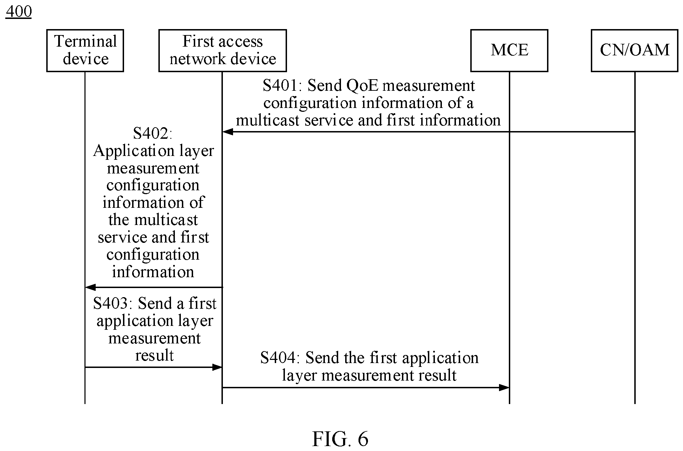

FIG. 6 is a schematic flowchart of a measurement configuration method 400 according to this application. The method 400 may be applied to the foregoing application scenario, and certainly may also be applied to another communication scenario. This is not limited in this application.

As shown in FIG. 6, the method 400 shown in FIG. 6 may include S401 to S410. The following describes the steps in the method 400 in detail with reference to FIG. 4.

S401: A CN or an OAM sends QoE measurement configuration information of a multicast service to a first access network device. Correspondingly, the first access network device receives the QoE measurement configuration information of the multicast service. The first access network device supports the multicast service.

It should be understood that, for the QoE measurement configuration information of the multicast service, refer to the corresponding descriptions in the foregoing method 200. An application layer measurement indicator in the QoE measurement configuration information of the multicast service is an access network device-invisible application layer measurement indicator.

In an implementation, the CN or the OAM further sends first information to the first access network device. For detailed descriptions of the first information, refer to the descriptions in S201 or S301. Details are not described herein again.

In an implementation, the CN or the OAM may send a notification message to the first access network device, where the notification message indicates that the first access network device may configure, for a terminal device, an access network device-visible application layer indicator that can be measured for the multicast service.

The access network device may configure, for the terminal device, an application layer measurement indicator (for example, an access network device-visible QoE measurement amount or measurement indicator in Table 1) that is to be measured. Generally, application layer measurement configuration information sent by the access network device to the terminal device includes the access network device-visible application layer measurement indicator. In other words, the access network device-visible application layer measurement indicator is usually a part of the measurement amount that is in an application layer measurement configuration and that is used by the terminal device to perform application layer measurement. The access network device may send the access network device-visible application layer measurement configuration information to the terminal device based on the access network device-visible application layer measurement indicator notified by the CN or the OAM.

The access network device-visible application layer measurement indicators mean that the access network device can interpret the application layer measurement indicators. "Visible" may alternatively be replaced with descriptions such as perceivable and learnable. This is not limited in this application.

This application does not limit which application layer measurement indicators can be used as the access network device-visible application layer measurement indicators. For example, a buffer level and a playout delay may be used as the access network device-visible application layer measurement indicators, or another application layer measurement indicator may be used as the access network device-visible application layer measurement indicator. In this application, the application layer measurement indicator may also be referred to as an application layer indicator for short.

S402: The first access network device sends application layer measurement configuration information of the multicast service and first configuration information to the terminal device, where the first configuration information includes the access network device-visible application layer measurement configuration information, and the first configuration information is used to configure the terminal device to report access network device-visible application layer measurement result information of the multicast service.

Correspondingly, the terminal device receives the application layer measurement configuration information of the multicast service and the first configuration information that are sent by the first access network device.

It should be understood that, for details about a case in which the first access network device sends the application layer measurement configuration information of the multicast service to the terminal device, refer to step S202 or step S302. Details are not described herein again.

For example, the first access network device may simultaneously send the application layer measurement configuration information of the multicast service and the first configuration information to the terminal device in one RRC message, or may not simultaneously send the application layer measurement configuration information of the multicast service and the first configuration information to the terminal device. For example, the first access network device first sends the application layer measurement configuration information, and then sends the first configuration information.

For example, the first configuration information may further include a comprehensive score of an application layer indicator, or an indicator indicating a quality degree of the application layer indicator. For example, a value of the indicator may be good, medium, or poor. For another example, the first configuration information further includes some thresholds, and different thresholds correspond to different indicator values. The terminal device determines, based on an application layer indicator measurement result and some thresholds corresponding to the application layer measurement indicator, to report an indicator indicating a quality degree corresponding to the application layer indicator measurement result.

For example, the first configuration information may further include a reporting period in which the terminal device reports the access network device-visible application layer measurement indicator. Optionally, when the access network device does not configure the reporting period, the first terminal device may report the access network device-visible application layer indicator when reporting an application layer measurement result corresponding to the invisible application layer measurement configuration.

S403: The terminal device performs application layer measurement based on the first configuration information, to obtain first measurement result information, and the terminal device sends the first measurement result information to the first access network device, where the first measurement result information includes the access network device-visible application layer measurement result information, and the first measurement result information includes a session identifier of the multicast service. Correspondingly, the first access network device receives the first measurement result information from the terminal device.

It should be understood that, the terminal device further performs application layer measurement based on the application layer measurement configuration information of the multicast service, to obtain the access network device-invisible application layer measurement result (for example, the first application layer measurement result), and sends the access network device-invisible application layer measurement result, for example, the first application layer measurement result to the first access network device.

When the first access network device is in a CU/DU split architecture, in an implementation, for a measurement result of a RAN-visible application layer measurement indicator, after the CU receives the first measurement result information from the terminal device, the CU sends the measurement result of the RAN-visible application layer measurement indicator to the DU, so that the DU adjusts PTP/PTM transmission and performs traffic split. That is, for an MRB, the DU may adjust a case in which the MRB is configured with only the PTP transmission or only the PTM transmission, or the MRB is configured with both the PTP transmission and the PTM transmission. In addition, the DU may further configure both the PTP and the PTM. The DU may dynamically adjust, based on the measurement result of the RAN-visible application layer measurement indicator, whether PTP transmission or PTM transmission is performed on some data packets.

The DU adjusts, based on the measurement result of the RAN-visible application layer measurement indicator, whether to configure only the PTP transmission or only the PTM transmission, or configure both the PTP transmission and the PTM transmission.

In another implementation, the CU adjusts, based on the measurement result of the RAN-visible application layer measurement indicator, whether to configure only the PTP transmission or only the PTM transmission, or configure both the PTP transmission and the PTM transmission.

S404: The first access network device sends the access network device-invisible application layer measurement result to the MCE. Correspondingly, the MCE receives the access network device-invisible application layer measurement result from the first access network device.

When sending the access network device-invisible application layer measurement result to the MCE, the first access network device further sends an identifier of the QoE measurement configuration information of the multicast service.

Optionally, the first access network device or the CU or the DU of the first access network device notifies the MCE whether the current multicast service is configured with only the PTP transmission or only the PTM transmission, or both the PTP transmission and the PTM transmission.

The first access network device may optimize radio resource management based on the measurement result that is of the access network device-visible application layer indicator in the multicast service and that is reported by the terminal device. For example, when a measurement result of an application layer indicator is low, for example, when a delay is long, the first access network device may allocate more resources to the terminal device, or increase a scheduling priority of the terminal device, to improve performance of the multicast service and improve user experience.

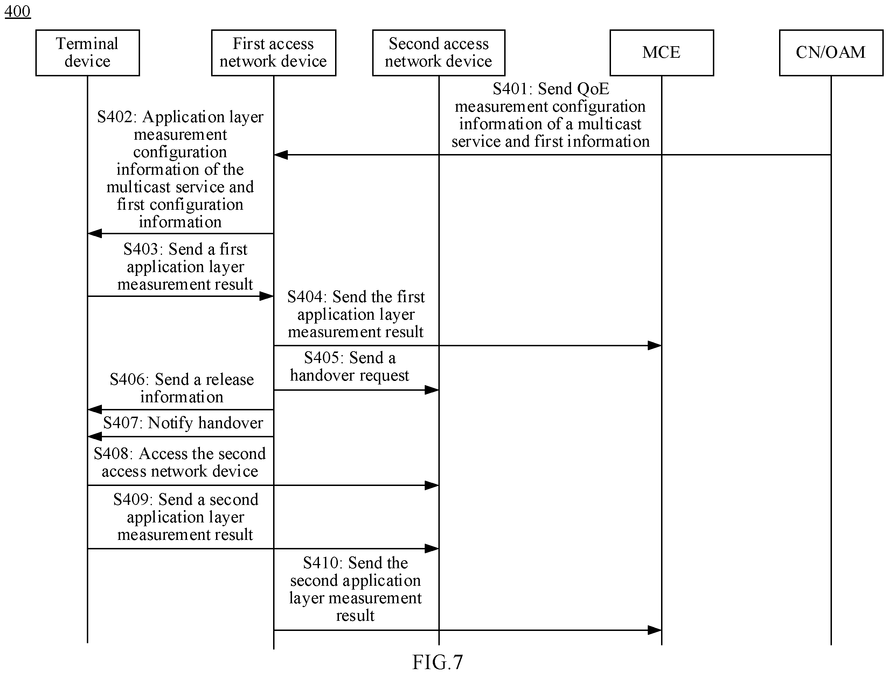

In an implementation, when the terminal device is handed over from the first access network device to a second access network device, this embodiment further includes the following step S405 to step S410. FIG. 7 is a schematic flowchart of a measurement configuration method 400 according to this application. The following describes step 405 to step S410 in detail with reference to FIG. 7.

S405: The first access network device sends a handover request to the second access network device, where the second access network device does not support the multicast service, and correspondingly, the second access network device responds to the handover request.

For example, the handover request carries only the access network device-visible application layer measurement indicator supported by a unicast service, and does not carry the access network device-visible application layer indicator supported by the multicast service. In other words, an RRC context in the handover request sent by the first access network device to the second access network device does not include the access network device-visible application layer indicator that is supported by the multicast service and that is configured by the first access network device for the terminal device. For example, the access network device-visible application layer indicator that is of the multicast service and that is configured by the first access network device for the terminal device to report includes an indicator A/B/C, but the access network device-visible application layer indicator of the unicast service supports only A/B. In this case, in the RRC context sent by the first access network device to the second access network device, only a case in which the first access network device configures the terminal device to report a measurement result of A/B is notified.

For example, a handover command generated by the second access network device carries the access network device-visible application layer measurement configuration information configured by the second access network device for the terminal device. The access network device-visible application layer measurement configuration information configured by the second access network device for the terminal device carries the access network device-visible application layer measurement indicator supported by the unicast service.

S406: The first access network device sends release information to the terminal device, where the release information indicates that the terminal device releases the access network device-visible application layer measurement indicator.

The release information may indicate that the terminal device releases reporting of the access network device-visible application layer indicator supported by the multicast service.

S407: The first access network device notifies the terminal device to be handed over to the second access network device, where the first access network device notifies, based on the handover command generated by the second access network device, the terminal device to be handed over to the second access network device.

S408: The terminal device accesses the second access network device.

For example, the second access network device sends, to the terminal device, the access network device-visible application layer measurement indicator supported by the unicast service.

S409: The terminal device sends second measurement result information to the second access network device. The second measurement result information includes the access network device-visible application layer measurement result.

Optionally, if the second access network device does not configure, for the terminal device, the access network device-visible application layer measurement information supported by the unicast service, an upper layer of an AS of the terminal device continues to perform measurement based on the access network device-visible application layer measurement information configured by the first access network device. However, the upper layer of the AS of the terminal device reports only a measurement result of the access network device-visible application layer measurement indicator supported by the unicast service. For example, the access network device-visible application layer indicator that is of the multicast service and that is configured by the first access network device for the terminal device to report includes the indicator A/B/C, but the access network device-visible application layer indicator of the unicast service supports only A/B. In this case, the terminal device reports only the measurement result of A/B to the second access network device.

The second access network device does not need to resend, to the terminal device, the access network device-visible application layer measurement configuration information supported by the unicast service, to reduce signaling overheads.

The first terminal device may further continue to perform application layer measurement on the second access network device by using the application layer measurement configuration information of the multicast service, to obtain the access network device-invisible application layer measurement result, and send the access network device-invisible application layer measurement result to the second access network device.

S410: The second access network device sends the access network device-invisible application layer measurement result to the MCE.

It should be understood that, the method 400 may be used in combination with the method 200 and the method 300. To be specific, the first access network device also sends the application layer measurement configuration information of the multicast service and the first information to the terminal device. In addition, the first access network device sends the first configuration information to the terminal device. Correspondingly, the first terminal device may perform access network device-invisible application layer measurement and perform access network device-visible application layer measurement.

In the method 400, when the terminal device is handed over from the first access network device that supports the multicast service to the second access network device that does not support the multicast service, the first terminal device may perform measurement by using the access network device-visible application layer measurement configuration information of the multicast service. However, the terminal device feeds back only the access network device-visible application layer measurement result of the unicast service to the second access network device. The second access network device may optimize the radio resource management based on the measurement result that is of the access network device-visible application layer indicator in the unicast service and that is reported by the terminal device. For example, the second access network device may allocate more resources to the terminal device, or increase the scheduling priority of the terminal device, to improve the performance of the unicast service, so as to improve the communication quality of the unicast service.

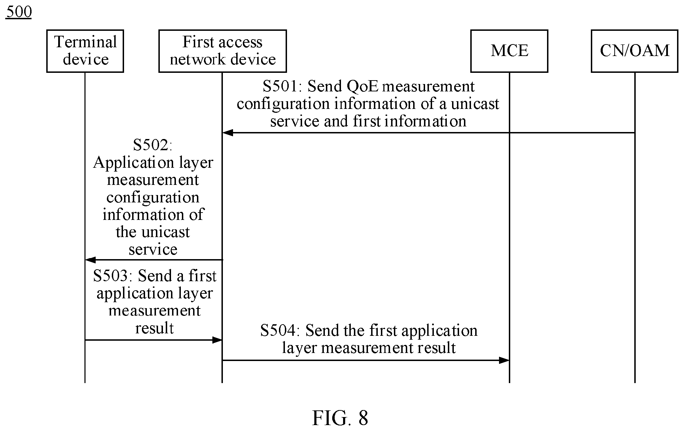

The following describes, through FIG. 8, how to process QoE measurement when the terminal device is handed over from the access network device that does not support the multicast service to the access network device that supports the multicast.

FIG. 8 is a schematic flowchart of a measurement configuration method 500 according to this application. The method 500 may be applied to the foregoing application scenario, and certainly may also be applied to another communication scenario. This is not limited in this application.

As shown in FIG. 8, the method 500 shown in FIG. 8 may include S501 to S509. The following describes the steps in the method 500 in detail with reference to FIG. 8.

S501: A CN or an OAM sends QoE measurement configuration information of a unicast service and first information to a first access network device.

The first information includes first indication information, and the first indication information indicates that a terminal device uses the QoE measurement configuration information of the unicast service when the terminal device changes from receiving the unicast service to receiving a multicast service. The first information is related to QoE measurement on the multicast service, and the multicast service corresponds to the unicast service. The multicast service corresponds to the unicast service, which means that the multicast service and the unicast service are a same data service, and the access network device sends data of the data service to the terminal device in a unicast or multicast manner. The first access network device does not support the multicast service.

Correspondingly, the first access network device receives the QoE measurement configuration information of the unicast service and the first information.

It should be noted that, the first indication information indicates that the terminal device uses the QoE measurement configuration information of the unicast service when the terminal device changes from receiving the unicast service to receiving the multicast service, which means that when the terminal device changes from receiving the unicast service to receiving the multicast service corresponding to the unicast service, the terminal device continues to perform application layer measurement by using the QoE measurement configuration information of the unicast service.

It should be understood that, for specific content of the QoE measurement configuration information of the unicast service, refer to the content of the QoE measurement configuration information of the multicast service. Details are not described herein again.

S502: The first access network device determines application layer measurement configuration information of the unicast service based on the QoE measurement configuration information of the unicast service and the first information, and the first access network device sends the application layer measurement configuration information of the unicast service to the terminal device.

Correspondingly, the terminal device receives the application layer measurement configuration information of the unicast service that is from the first access network device.

For example, the application layer measurement configuration information of the unicast service includes second indication information, and the second indication information indicates that a first terminal device uses the application layer measurement configuration information of the unicast service when the terminal device changes from receiving the unicast service to receiving the multicast service. It should be noted that, the second indication information indicates that the terminal device uses the application layer measurement configuration information of the unicast service when the terminal device changes from receiving the unicast service to receiving the multicast service, which means that when the terminal device changes from receiving the unicast service to receiving the multicast service corresponding to the unicast service, the terminal device continues to perform application layer measurement by using the application layer measurement configuration information of the unicast service.

For example, the application layer measurement configuration information of the unicast service further includes an application layer measurement identifier of the unicast service and/or an application layer measurement identifier of the multicast service, and the application layer measurement identifier indicates an application layer measurement task of the terminal device. In an embodiment, if the application layer measurement identifier of the unicast service is the same as the application layer measurement identifier of the multicast service, the application layer measurement configuration information of the unicast service may include one application layer measurement identifier, and may be the application layer measurement identifier of the multicast service or the application layer measurement identifier of the unicast service. **In** another implementation, if the application layer measurement identifier of the unicast service is different from the application layer measurement identifier of the multicast service, the application layer measurement configuration information of the unicast service may include two application layer measurement identifiers, namely, the application layer measurement identifier of the multicast service and the application layer measurement identifier of the unicast service.

For descriptions of the application layer measurement identifier, refer to the descriptions in step S202. Details are not described herein again.

S503: The terminal device performs application layer measurement based on the application layer measurement configuration information of the unicast service, to obtain first application layer measurement result information, and the terminal device sends the first application layer measurement result information to the first access network device, where the first application layer measurement result information is an application layer measurement result of the unicast service, and the first application layer measurement result information includes the application layer measurement identifier of the unicast service. Correspondingly, the first access network device receives the first application layer measurement result information.

S504: The first access network device sends the first application layer measurement result information to the MCE.

Correspondingly, the MCE receives the first application layer measurement result information from the first access network device.

The first access network device further sends the identifier of the QoE measurement configuration information of the unicast service to the MCE.

The first access network device sends the application layer measurement configuration information of the unicast service to the terminal device, where the application layer measurement configuration information of the unicast service is determined with reference to the first information related to the multicast service, and the information about the multicast service corresponding to the unicast service is also considered when QoE measurement on the unicast service is implemented. In this way, the terminal device subsequently no longer needs to receive application layer measurement configuration information of the multicast service. The terminal device performs measurement based on the application layer measurement configuration information of the unicast service, and reports the first application layer measurement result information to the first access network device. The first access network device sends the first application measurement result information to the MCE. The network side such as the OAM may optimize the network based on the application layer measurement result information, to improve a performance parameter of the unicast service, so as to improve communication quality of the unicast service.

In an implementation, when the terminal device is handed over from the first access network device to a second access network device, this embodiment further includes the following step S505 to step S509.

The first access network device does not support the multicast service, but the second access network device supports the multicast service. The first access network device is a source access network device, and the second access network device is a target access network device. In this case, the data service is first processed between the source access network device and the target access network device based on the unicast service. After the handover or in the handover process, the target access network device establishes an MRB of the multicast service for the terminal device.

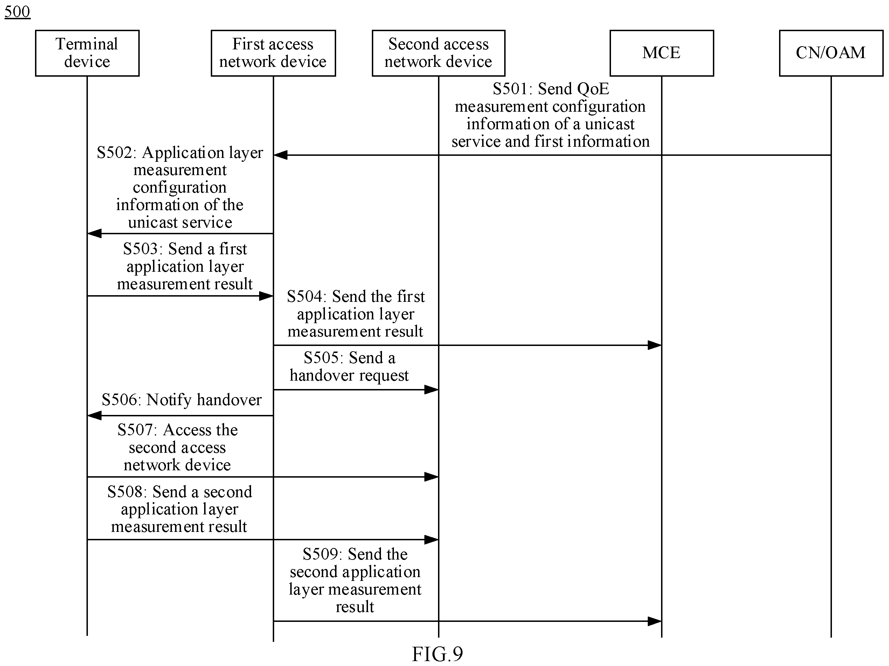

The foregoing briefly describes how to process the data service when the terminal device is handed over from the first access network device to the second access network device. The following describes how the terminal device performs application layer measurement when the terminal device is handed over from the first access network device to the second access network device. FIG. 9 is a schematic flowchart of a measurement configuration method 500 according to this application. The following describes step S505 to step S509 in detail with reference to FIG. 9.

S505: The first access network device sends a handover request to the second access network device, where the handover request includes an identifier of the QoE measurement configuration information of the multicast service and the application layer measurement identifier of the multicast service. The second access network device supports the multicast service. The identifier of the QoE measurement configuration information of the multicast service and the application layer measurement identifier of the multicast service are determined by the first access network device, and the identifier of the QoE measurement configuration information of the multicast service corresponds to the identifier of the QoE measurement configuration information of the unicast service. Correspondingly, the second access network device responds to the handover request.

In an implementation, the first access network device determines the identifier of the QoE measurement configuration information of the multicast service based on the identifier of the QoE measurement configuration information of the unicast service. For example, the identifier of the QoE measurement configuration information of the unicast service is the same as the identifier of the QoE measurement configuration information of the multicast service. For another example, the QoE measurement configuration information of the unicast service includes a correspondence between the identifier of the QoE measurement configuration information of the unicast service and the identifier of the QoE measurement configuration information of the multicast service, so that the second access network device can obtain the identifier of the QoE measurement configuration information of the multicast service.

In an implementation, the first access network device determines the application layer measurement identifier of the multicast service based on the application layer measurement identifier of the unicast service. For example, the application layer measurement identifier of the multicast service is the same as the application layer measurement identifier of the unicast service. The handover request includes the application layer measurement identifier of the multicast service, so that the second access network device can obtain an identifier of the QoE measurement configuration information that corresponds to a second application layer measurement result and that is reported by the terminal device.

Optionally, the first access network device may directly send the handover request to the second access network device, or the first access network device may send the handover request to the second access network device through the core network.

For example, the handover request includes the service type of the multicast service.

Specifically, the first access network device determines the service type of the multicast service. Currently, there is only one service type of the multicast service in QoE measurement on the multicast service, namely, the multicast service. Therefore, when the first access network device determines that the second access network device supports the multicast service, the handover request directly sent by the first access network device to the second access network device includes index information of the service type of the multicast service. That the first access network device determines the service type of the multicast service may also be understood as that the first access network device sets a service type of the QoE measurement on the multicast service.

For example, when the first access network device determines that the terminal device is handed over to the second access network device, the first access network device may first reconfigure the terminal device from receiving the unicast service to receiving the multicast service, and then the terminal device is handed over from the first access network device to the second access network device.

S506: The first access network device notifies the terminal device to be handed over to the second access network device.

S507: The terminal device accesses the second access network device.

S508: The terminal device sends second application layer measurement result information to the second access network device.

The terminal device continues to perform measurement based on the application layer measurement configuration information of the unicast service that is sent by the first access network device, and sends the second application layer measurement result information to the second access network device. The second application layer measurement result information includes an application layer measurement result of the multicast service, and the second application layer measurement result information includes the application layer measurement identifier of the multicast service. Correspondingly, the second access network device receives the second application layer measurement result information.

Specifically, the second application layer measurement result information includes the application layer measurement identifier of the multicast service, and the measurement identifier of the multicast service is delivered by the first access network device in the application layer measurement configuration information of the unicast service. For descriptions of the application layer measurement identifier of the multicast service, refer to step S502 for understanding. Details are not described herein again.

Optionally, the second application layer measurement result information carries the application layer measurement result of the multicast service in a form of the container.

Specifically, the upper layer of the AS of the terminal device sends the second application layer measurement result information to the AS of the terminal device. The AS of the terminal device sends the second application layer measurement result information to the second access network device.

In a possible implementation, the second application layer measurement result information includes a session identifier of the multicast service, or the second application layer measurement result information includes a session identifier of the multicast service and an identifier of a network slice.

Specifically, the terminal device accesses the second access network device, the second access network device supports the multicast service, and the upper layer of the AS of the terminal device can learn that the AS of the terminal device changes from receiving the service in the unicast manner to receiving the service in the multicast manner. In this case, the upper layer of the AS of the terminal device includes the session identifier of the multicast service in a subsequently generated second application layer measurement result.

In another implementation, the second application layer measurement result information includes only the identifier of the network slice.

Specifically, regardless of whether an access network device currently accessed by the terminal device supports the multicast service, the terminal device reports the application layer measurement result only in a receiving manner used when the application layer measurement is initially configured. To be specific, when the terminal device initially receives the application layer measurement of the unicast service in a unicast manner, all application layer measurement results subsequently reported by the terminal device carry the identifier of the network slice, and does not need to carry the session identifier of the multicast service.

Optionally, the identifier of the network slice and/or the session identifier of the multicast service are included in the application layer measurement result.

In an implementation, when reporting the second application layer measurement result information to the access network device, the first terminal device may further report a current service receiving manner, that is, whether to receive a service in a unicast manner or a multicast manner.

S509: The second access network device sends the second application measurement result information to the MCE. Correspondingly, the MCE receives the second application layer measurement result information from the second access network device.

The second access network device further sends the identifier of the QoE measurement configuration information of the multicast service to the MCE.

Optionally, the second application layer measurement result includes third indication information. The third indication information indicates whether the current terminal device receives the service in the unicast manner or the multicast manner.

When the terminal device is handed over from the first access network device does not support the multicast service to the second access network device that supports the multicast service, the terminal device still performs measurement by using the application layer measurement configuration information of the unicast service that is configured by the first access network device, and the second access network device does not need to send, to the terminal device again, the application layer measurement configuration information of the multicast service, so that signaling overheads can be reduced. The terminal device feeds back the second application layer measurement result information to the second access network device. The second application layer measurement result information is the application layer measurement result information of the multicast service. The network side such as the OAM may optimize performance of the multicast service based on the application layer measurement result information of the multicast service, to improve the communication quality of the multicast service.

It should be understood that, the method 500, the method 200, and the method 300 may be combined with each other. The method 200 and the method 300 describe a procedure in which the terminal device is handed over from the first access network device that supports the multicast service to the second access network device that does not support the multicast service, and the method 500 describes a procedure in which the terminal device is handed over from the first access network device that does not support the multicast service to the second access network device that supports the multicast. A mutual combination process is as follows. The first terminal device is handed over from the first access network device that supports the multicast service to the second access network device that does not support the multicast service, and the second terminal device is handed over from a third access network device that does not support the multicast service (the third access network device that does not support the multicast service may be the first access network device in the method 500) to the first access network device that supports the multicast service.

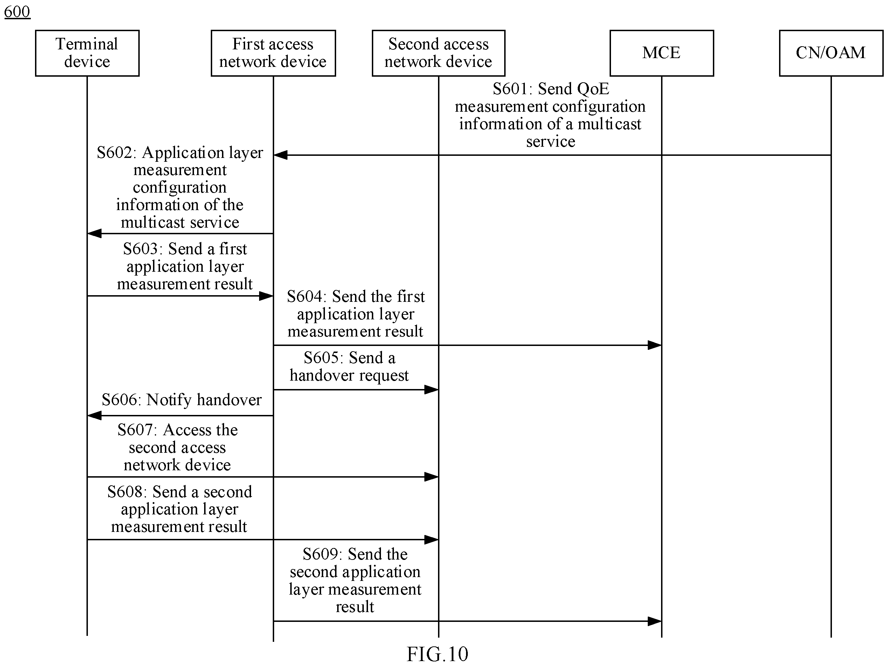

The following describes, through FIG. 10, how to process QoE measurement when the terminal device is handed over from the access network device that does not support the multicast service to the access network device that supports the multicast. Different from the method 200, in a method 600 shown in FIG. 10, the second indication information does not need to be sent to the terminal device. When the terminal device receives the application layer measurement configuration information of the multicast service that is sent by the first access network device, the terminal device uses the application layer measurement configuration information of the multicast service by default when the terminal device changes from receiving the multicast service to receiving the unicast service.

FIG. 10 is a schematic flowchart of a measurement configuration method 600 according to this application. The method 600 may be applied to the foregoing application scenario, and certainly may also be applied to another communication scenario. This is not limited in this application.

S601: A CN or an OAM sends QoE measurement configuration information of a multicast service to a first access network device, where the QoE measurement configuration information of the multicast service includes a service type of the multicast service and a service type of a unicast service, and the multicast service corresponds to the unicast service.

**In** an implementation, the service type of the multicast service and the service type of the unicast service may not be included in the QoE measurement configuration information of the multicast service, but may be included in another piece of information, for example, the first information in step S301.

For example, the QoE measurement configuration information of the multicast service further includes a session identifier of the multicast service, and the session identifier of the multicast service is used to identify a multicast session on which application layer measurement is to be performed.

For example, the QoE measurement configuration information of the multicast service includes first indication information, and the first indication information indicates that a terminal device uses the QoE measurement configuration information of the multicast service when the terminal device changes from receiving the multicast service to receiving the unicast service.

For related descriptions of the session identifier of the multicast service and related descriptions of the first indication information, refer to the descriptions corresponding to S301 in the method 300.

S602: The first access network device sends application layer measurement configuration information of the multicast service to the terminal device, where the application layer measurement configuration information of the multicast service includes the service type of the multicast service, and the first access network device determines the application layer measurement configuration information of the multicast service based on the QoE measurement configuration information of the multicast service.

Correspondingly, the terminal device receives the application layer measurement configuration information of the multicast service that is from the first access network device.

In an implementation, the application layer measurement configuration information of the multicast service further includes an application layer measurement identifier of the multicast service and/or an application layer measurement identifier of the unicast service, and the application layer measurement identifier indicates an application layer measurement task of the terminal device.

For descriptions of the application layer measurement identifier, refer to the descriptions in step S302.

S603: The terminal device performs application layer measurement based on the application layer measurement configuration information of the multicast service, to obtain first application layer measurement result information, and the terminal device sends the first application layer measurement result information to the first access network device, where the first application layer measurement result information includes an application layer measurement result of the multicast service, and the first application layer measurement result information includes the application layer measurement identifier of the multicast service. Correspondingly, the first access network device receives the first application layer measurement result information.

For example, the first application layer measurement result information includes the session identifier of the multicast service.

For example, the first application layer measurement result information further includes an identifier of a network slice, and the identifier of the network slice indicates a network slice corresponding to the multicast service.

S604: The first access network device sends the first application layer measurement result information to an MCE.

Correspondingly, the MCE receives the first application layer measurement result information from the first access network device.

In an implementation, the first access network device further sends an identifier of the QoE measurement configuration information of the multicast service to the MCE.

The first access network device sends the application layer measurement configuration information of the multicast service to the terminal device, the first terminal device may measure the unicast service corresponding to the multicast service based on the application layer measurement configuration information of the multicast service, and QoE measurement on the unicast service corresponding to the multicast service is also considered when QoE measurement on the multicast service is implemented. The terminal device no longer needs to receive application layer measurement configuration information of the unicast service. The terminal device performs measurement based on the application layer measurement configuration information of the multicast service, and reports the first application layer measurement result information to the first access network device. The first access network device sends the first application measurement result information to the MCE. The network side such as the OAM may optimize the network based on the first application layer measurement result information, to improve a performance parameter of the multicast service, so as to improve communication quality of the multicast service.

S605: The first access network device sends a handover request to a second access network device, where the handover request includes an identifier of QoE measurement configuration information of the unicast service and an application layer measurement identifier of the unicast service, and the handover request further includes the service type of the unicast service, where the second access network device does not support the multicast service, the identifier of the QoE measurement configuration information of the unicast service and the application layer measurement identifier of the unicast service are determined by the first access network device, and the identifier of the QoE measurement configuration information of the unicast service corresponds to an identifier of the QoE measurement configuration information of the multicast service. Correspondingly, the second access network device responds to the handover request.

In an implementation, when the first access network device obtains the first indication information, the handover request sent by the first access network device to the second access network device further includes the service type of the unicast service.

S606: The first access network device notifies the terminal device to be handed over to the second access network device.

S607: The terminal device accesses the second access network device.

S608: The terminal device sends second application layer measurement result information to the second access network device.

S609: The second access network device sends the second application measurement result information to the MCE. Correspondingly, the MCE receives the second application layer measurement result information from the second access network device. The second access network device further sends the identifier of the QoE measurement configuration information of the unicast service to the MCE.

For example, the second application layer measurement result includes third indication information. The third indication information indicates whether the current terminal device receives, in a unicast manner or a multicast manner, a service on which the application layer measurement is performed.

For example, the second access network device sends only a part of the second application layer measurement result information to the MCE. For example, the second access network device sends the application layer measurement result in the second application layer measurement result information to the MCE.

It should be understood that for step S603 to step S609, refer to the foregoing step S203 to step S209.

It should be further understood that step S605 to step S609 are optional steps, and are performed when the terminal device is handed over from the first access network device to the second access network device.

When the terminal device is handed over from the first access network device that supports the multicast service to the second access network device that does not support the multicast service, the terminal device still performs measurement by using the application layer measurement configuration information of the multicast service that is configured by the first access network device, and the second access network device does not need to send, to the terminal device again, the application layer measurement configuration information of the unicast service, so that signaling overheads can be reduced. The terminal device sends the second application layer measurement result information to the second access network device. The second application layer measurement result information is application layer measurement result information of the unicast service. The network side such as the OAM may optimize performance of the unicast service based on the application layer measurement result information of the unicast service, to improve communication quality of the unicast service. Generally, an operator obtains the second application measurement result information from the MCE, and then the operator optimizes the network through the OAM, to improve a performance parameter of the unicast service.

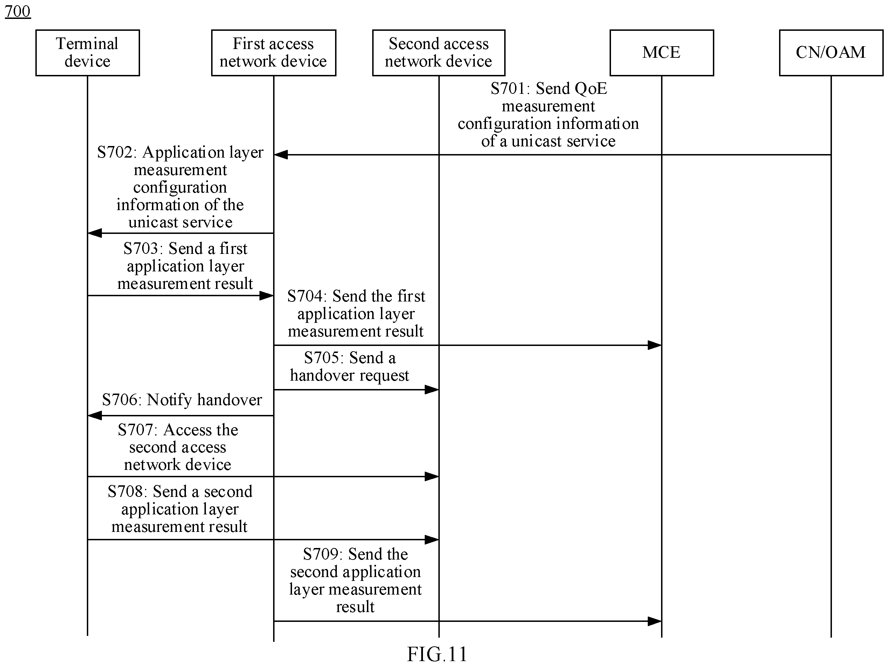

The following describes, through FIG. 11, how to process QoE measurement when the terminal device is handed over from the access network device that supports the multicast service to the access network device that does not support multicast. Different from the method 500, in a method 700 shown in FIG. 11, the second indication information does not need to be sent to the terminal device. When the terminal device receives the application layer measurement configuration information of the unicast service that is sent by the first access network device, the terminal device uses the application layer measurement configuration information of the unicast service by default when the terminal device changes from receiving the unicast service to receiving the multicast service.

FIG. 11 is a schematic flowchart of a method 700 for measuring quality of experience of a terminal device according to this application. The method 700 may be applied to the foregoing application scenario, and certainly may also be applied to another communication scenario. This is not limited in this application.

S701: A CN or an OAM sends QoE measurement configuration information of a unicast service to a first access network device. The first access network device does not support a multicast service. Correspondingly, the first access network device receives the QoE measurement configuration information of the unicast service.

Optionally, the QoE measurement configuration information of the unicast service includes first indication information, and the first indication information indicates that a terminal device uses the QoE measurement configuration information of the unicast service when the terminal device changes from receiving the unicast service to receiving the multicast service. The multicast service corresponds to the unicast service. The multicast service corresponds to the unicast service means that the multicast service and the unicast service are a same data service, and the terminal device receives the data service in different receiving manners.

S702: The first access network device determines application layer measurement configuration information of the unicast service based on the QoE measurement configuration information of the unicast service, and the first access network device sends the application layer measurement configuration information of the unicast service to the terminal device. Correspondingly, the terminal device receives the application layer measurement configuration information of the unicast service that is from the first access network device.

In an implementation, the application layer measurement configuration information of the unicast service includes an application layer measurement identifier of the unicast service and/or an application layer measurement identifier of the multicast service. For specific descriptions of a case in which the application layer measurement configuration information of the unicast service includes the application layer measurement identifier of the unicast service and/or the application layer measurement identifier of the multicast service, refer to S602.

S703: The terminal device performs application layer measurement based on the application layer measurement configuration information of the unicast service, to obtain first application layer measurement result information, and the terminal device sends the first application layer measurement result information to the first access network device, where the first application layer measurement result information is an application layer measurement result of the unicast service, and the first application layer measurement result information includes the application layer measurement identifier of the unicast service. Correspondingly, the first access network device receives the first application layer measurement result information.

S704: The first access network device sends the first application layer measurement result information to an MCE. Correspondingly, the MCE receives the first application layer measurement result information from the first access network device.

The first access network device further sends an identifier of the QoE measurement configuration information of the unicast service to the MCE.

The first access network device sends the application layer measurement configuration information of the unicast service to the terminal device, the first terminal device may measure the multicast service corresponding to the unicast service based on the application layer measurement configuration information of the unicast service, and QoE measurement on the multicast service corresponding to the unicast service is also considered when QoE measurement on the unicast service is implemented. In this way, the terminal device subsequently no longer needs to receive the application layer measurement configuration information of the unicast service. The terminal device performs measurement based on the application layer measurement configuration information of the unicast service, and reports the first application layer measurement result information to the first access network device. The first access network device sends the first application measurement result information to the MCE. The network side such as the OAM may optimize the network based on the first application layer measurement result information, to improve a performance parameter of the unicast service, so as to improve communication quality of the unicast service.

In an implementation, when the terminal device is handed over from the first access network device to a second access network device, this embodiment further includes the following step S705 to step S709.

S705: The first access network device sends a handover request to the second access network device, where the handover request includes an identifier of QoE measurement configuration information of the multicast service and the application layer measurement identifier of the multicast service. The second access network device supports the multicast service, the identifier of the QoE measurement configuration information of the multicast service and the application layer measurement identifier of the multicast service are determined by the first access network device, and the identifier of the QoE measurement configuration information of the multicast service corresponds to the identifier of the QoE measurement configuration information of the unicast service. Correspondingly, the second access network device responds to the handover request.

For example, the handover request includes a service type of the multicast service.

S706: The first access network device notifies the terminal device to be handed over to the second access network device.

S707: The terminal device accesses the second access network device.

S708: The terminal device sends second application layer measurement result information to the second access network device.

S709: The second access network device sends the second application measurement result information to the MCE. Correspondingly, the MCE receives the second application layer measurement result information from the second access network device. The second access network device further sends the identifier of the QoE measurement configuration information of the multicast service to the MCE.

It should be understood that for step S703 to step S709, refer to the foregoing step S503 to step S509.

It should be further understood that step S705 to step S709 are optional steps, and are performed when the terminal device is handed over from the first access network device to the second access network device.

When the terminal device is handed over from the first access network device that does not support the multicast service to the second access network device that supports the multicast service, the terminal device still performs measurement by using the application layer measurement configuration information of the unicast service that is configured by the first access network device, and the second access network device does not need to send, to the terminal device again, the application layer measurement configuration information of the multicast service corresponding to the unicast service, so that signaling overheads can be reduced. The terminal device feeds back the second application layer measurement result information to the second access network device. The second application layer measurement result information is application layer measurement result information of the multicast service. The network side such as the OAM may optimize performance of the multicast service based on the application layer measurement result information of the multicast service, to improve communication quality of the multicast service. Generally, an operator obtains the first application measurement result information from the MCE, and then the operator optimizes the network through the OAM, to improve a performance parameter of the multicast service.

It should be understood that the foregoing descriptions are merely intended to help a person skilled in the art better understand this application, but are not intended to limit the scope of this application. It is clear that a person skilled in the art may make various equivalent modifications or changes based on the foregoing examples. For example, some steps in the foregoing methods may be unnecessary, or some steps may be newly added. Alternatively, any two or more of the foregoing embodiments are combined. A modified, changed, or combined solution also falls within the scope of this application.

It should be understood that sequence numbers of the foregoing processes do not mean execution sequences. The execution sequences of the processes should be determined according to functions and internal logic of the processes, and should not be construed as any limitation on the implementation processes of this application.

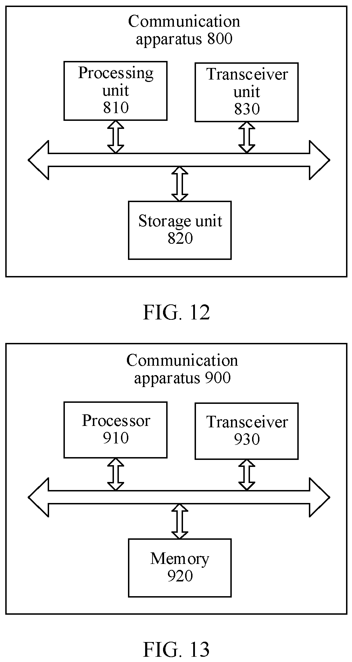

The foregoing describes in detail the measurement configuration method in this application with reference to FIG. 1 to FIG. 11. The following describes in detail a communication apparatus in this application with reference to FIG. 12 and FIG. 13.

FIG. 12 is a block diagram of a communication apparatus 800 according to this application.

In some embodiments, the communication apparatus 800 may be a terminal device, or may be a chip or a circuit, for example, a chip or a circuit that may be disposed in the terminal device.

In some embodiments, the communication apparatus 800 may be an access network device, or may be a chip or a circuit, for example, a chip or a circuit that may be disposed in the access network device.

In some embodiments, the communication apparatus 800 may be a core network device (for example, a policy control function network element, a session management function network element, or an access and mobility management network element), or may be a chip or a circuit, for example, a chip or a circuit that may be disposed in the core network device.

In a possible manner, the communication apparatus 800 may include a processing unit 810 (namely, an example of a processor) and a transceiver unit 830. In some possible implementations, the processing unit 810 may also be referred to as a determining unit. In some possible implementations, the transceiver unit 830 may include a receiving unit and a sending unit.

In an implementation, the transceiver unit 830 may be implemented by using a transceiver, a transceiver-related circuit, or an interface circuit.

In an implementation, the communication apparatus may further include a storage unit 820. In a possible manner, the storage unit 820 is configured to store instructions. In an implementation, the storage unit may alternatively be configured to store data or information. The storage unit 820 may be implemented by using a memory.

In a possible design, the processing unit 810 is configured to execute the instructions stored in the storage unit 820, to enable the communication apparatus 800 to implement the steps performed by the terminal device in the foregoing methods. Alternatively, the processing unit 810 may be configured to invoke the data in the storage unit 820, to enable the communication apparatus 800 to implement the steps performed by the terminal device in the foregoing methods.

In a possible design, the processing unit 810 is configured to execute the instructions stored in the storage unit 820, to enable the communication apparatus 800 to implement the steps performed by the access network device in the foregoing methods. Alternatively, the processing unit 810 may be configured to invoke the data in the storage unit 820, to enable the communication apparatus 800 to implement the steps performed by the access network device in the foregoing methods.

For example, the processing unit 810, the storage unit 820, and the transceiver unit 830 may communicate with each other through an internal connection path for transmission of a control signal and/or a data signal. For example, the storage unit 820 is configured to store a computer program. The processing unit 810 may be configured to invoke the computer program from the storage unit 820 and run the computer program, to control the transceiver unit 830 to receive a signal and/or send a signal, to complete the steps of the terminal device or the access network device in the foregoing methods. The storage unit 820 may be integrated into the processing unit 810, or may be disposed separately from the processing unit 810.

Optionally, if the communication apparatus 800 is a communication device (for example, the terminal device or the access network device), the transceiver unit 830 includes a receiver and a transmitter. The receiver and the transmitter may be a same physical entity or different physical entities. When the receiver and the transmitter are the same physical entity, the receiver and the transmitter may be collectively referred to as a transceiver.

When the communication apparatus 800 is the terminal device, or the communication apparatus is the access network device or the core network device, the transceiver unit 830 may be a sending unit or a transmitter when sending information, and the transceiver unit 830 may be a receiving unit or a receiver when receiving information. The transceiver unit may be a transceiver. The transceiver, the transmitter, or the receiver may be a radio frequency circuit. When the communication apparatus includes a storage unit, the storage unit is configured to store computer instructions. The processing unit is communicatively connected to the storage unit, and the processing unit executes the computer instructions stored in the storage unit, so that the communication apparatus can perform any one of the method 200 to the method 700. The processor may be a general-purpose central processing unit (CPU), a microprocessor, or an application specific integrated circuit (Application Specific Integrated Circuit, ASIC).

Optionally, if the communication apparatus 800 is the chip or the circuit, the transceiver unit 830 includes an input interface and an output interface.

When the communication apparatus 800 is the chip, the transceiver unit 830 may be an input and/or output interface, a pin, a circuit, or the like. The processing unit 810 may execute computer-executable instructions stored in the storage unit, to enable the communication apparatus to perform, for example, any one of the method 200 to the method 700. Optionally, the storage unit is a storage unit in the chip, for example, a register or a buffer, or the storage unit may be a storage unit in the terminal device but outside the chip, for example, a read-only memory (Read-Only Memory, ROM), another type of static storage device capable of storing static information and instructions, or a random access memory (Random Access Memory, RAM).

In an implementation, a function of the transceiver unit 830 may be considered to be implemented by using a transceiver circuit or a transceiver-dedicated chip. It may be considered that the processing unit 810 is implemented by using a dedicated processing chip, a processing circuit, a processing unit, or a general-purpose chip.

In another implementation, it may be considered that the communication apparatus (for example, the terminal device, the core network device, or the access network device) provided in this embodiment of this application is implemented by using a general-purpose computer. In other words, program code for implementing functions of the processing unit 810 and the transceiver unit 830 is stored in the storage unit 820, and the general-purpose processing unit implements the functions of the processing unit 810 and the transceiver unit 830 by executing the code in the storage unit 820.

In some embodiments, the communication apparatus 800 may be an access network device, or may be a chip or a circuit that is disposed in the access network device. When the communication apparatus 800 is the access network device, or the chip or the circuit that is disposed in the access network device, modules or units in the communication apparatus 800 may be configured to perform the actions or processing processes performed by the first access network device (an access network device that supports a multicast service) in the foregoing methods. To avoid repetition, detailed descriptions thereof are omitted herein.

In some embodiments, the communication apparatus 800 may be an access network device, or may be a chip or a circuit that is disposed in the access network device. When the communication apparatus 800 is the access network device, or the chip or the circuit that is disposed in the access network device, modules or units in the communication apparatus 800 may be configured to perform the actions or processing processes performed by the access network device (a first access network device that supports a unicast service) in the foregoing methods. To avoid repetition, detailed descriptions thereof are omitted herein.

In some embodiments, the communication apparatus 800 may be a terminal device, or may be a chip or a circuit that is disposed in the terminal device. When the communication apparatus 800 is the terminal device, or the chip or the circuit that is disposed in the terminal device, modules or units in the communication apparatus 800 may be configured to perform the actions or processing processes performed by the terminal device in the foregoing methods. To avoid repetition, detailed descriptions thereof are omitted herein.

In some embodiments, the communication apparatus 800 may be a core network device or a network management device, or a chip or a circuit that is disposed in the core network device or the network management device. When the communication apparatus 800 is the core network device or the network management device, or the chip or the circuit that is disposed in the core network device or the network management device, modules or units in the communication apparatus 800 may be configured to perform the actions or processing processes performed by the core network device or the network management device in the foregoing methods. To avoid repetition, detailed descriptions thereof are omitted herein.

FIG. 13 is a diagram of a structure of a communication apparatus 900 according to this application. The communication apparatus 900 may include a processor 910, a memory 920, and a transceiver 930. The processor 910, the memory 920, and the transceiver 930 are respectively configured to implement functions of the processing unit 810, the storage unit 820, and the transceiver unit 830.

It should be understood that, the processor in this embodiment of this application may be a central processing unit (central processing unit, CPU), or may be another general-purpose processor, a digital signal processor (digital signal processor, DSP), an application specific integrated circuit (application specific integrated circuit, ASIC), a field programmable gate array (field programmable gate array, FPGA), or another programmable logic device, discrete gate or transistor logic device, discrete hardware component, or the like. The general-purpose processor may be a microprocessor, or the processor may be any conventional processor or the like.

It should be further understood that in this embodiment of this application, the memory may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache.

All or some of the foregoing embodiments may be implemented by using software, hardware, firmware, or any combination thereof. When software is used to implement embodiments, the foregoing embodiments may be implemented completely or partially in a form of a computer program product. The computer program product includes one or more computer instructions or computer programs. When the computer instructions or the computer programs are loaded or executed on a computer, the procedure or functions according to embodiments of this application are all or partially generated. The computer may be a general-purpose computer, a dedicated computer, a computer network, or other programmable apparatuses. The computer instructions may be stored in a computer-readable storage medium, or may be transmitted from one computer-readable storage medium to another computer-readable storage medium. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, DVD), a semiconductor medium, or the like. The semiconductor medium may be a solid-state drive.

An embodiment of this application further provides a computer-readable storage medium, configured to store computer program code. The computer program code includes instructions used to perform the measurement configuration method in this application in the foregoing method 200 to the method 700. The readable medium may be a ROM or a RAM. This is not limited in this application.

This application further provides a computer program product. The computer program product includes instructions, and when the instructions are executed, the core network device, the terminal device, or the access network device may perform the operations corresponding to the core network device, the access network device, or the terminal device in the foregoing method.

An embodiment of this application further provides a communication system. The communication system includes the access network device, the terminal device, and the core network device that are provided in this application. The communication system may complete the measurement configuration method provided in this application.

An embodiment of this application further provides a system chip. The system chip includes: a processing unit and a communication unit. The processing unit may be, for example, a processor, and the communication unit may be, for example, an input/output interface, a pin, or a circuit. The processing unit may execute computer instructions, so that a chip in the communication apparatus performs the measurement configuration method provided in this application.

Optionally, the computer instructions are stored in a storage unit.

Optionally, the storage unit is a storage unit in the chip, for example, a register or a buffer, or the storage unit may be a storage unit located in the terminal device but outside the chip, for example, a ROM, another type of static storage device capable of storing static information and instructions, or a RAM. The processor mentioned anywhere above may be a CPU, a microprocessor, an ASIC, or one or more integrated circuits used to control program execution of the foregoing measurement configuration methods.

It should be understood that, the terms "and/or" and "at least one of A or B" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or another form.

The units described as separate parts may or may not be physically separate, and parts displayed as units may or may not be physical units, and may be located at one location, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units are integrated into one unit.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A measurement configuration method, wherein the method is applied to a first access network device, and comprises:
obtaining quality of experience QoE measurement configuration information of a first multicast service and first information, wherein the first information is related to QoE measurement on a unicast service, and the first multicast service corresponds to the unicast service;
determining application layer measurement configuration information of the first multicast service based on the QoE measurement configuration information of the first multicast service and the first information; and
sending the application layer measurement configuration information to a first terminal device.

2. The method according to claim 1, wherein the first information comprises first indication information, and the first indication information indicates that the first terminal device uses the QoE measurement configuration information when the first terminal device changes from receiving the first multicast service to receiving the unicast service; and
the application layer measurement configuration information comprises second indication information, and the second indication information indicates that the first terminal device uses the application layer measurement configuration information when the first terminal device changes from receiving the first multicast service to receiving the unicast service.

3. The method according to claim 1, wherein the first information comprises QoE measurement configuration information of the unicast service; and the method further comprises:
sending application layer measurement configuration information of the unicast service to the first terminal device.

4. The method according to any one of claims 1 to 3, wherein the first information comprises a service type of the unicast service.

5. The method according to any one of claims 1 to 4, wherein
the QoE measurement configuration information of the first multicast service comprises a session identifier of the first multicast service.

6. The method according to any one of claims 1 to 5, wherein the method further comprises:
receiving application layer measurement result information from the first terminal device, wherein the application layer measurement result information comprises the session identifier of the first multicast service.

7. The method according to any one of claims 1 to 6, wherein the method further comprises:
receiving the application layer measurement result information from the first terminal device, wherein the application layer measurement result information comprises an identifier of a network slice, and the identifier of the network slice indicates a network slice of the first multicast service and/or a network slice of the unicast service.

8. The method according to any one of claims 1 to 7, wherein the method further comprises:
sending first configuration information to the first terminal device, wherein the first configuration information comprises access network device-visible application layer measurement configuration information, and the first configuration information is used to configure the first terminal device to report access network device-visible application layer measurement result information of the first multicast service; and
receiving first measurement result information from the first terminal device, wherein the first measurement result information comprises the access network device-visible application layer measurement result information, and the access network device-visible application layer measurement result information comprises the session identifier of the first multicast service.

9. The method according to claim 8, wherein the method further comprises:
determining a propagation manner of the first multicast service based on the first measurement result information.

10. The method according to claim 8 or 9, wherein the method further comprises:
sending, by the first access network device, release information to the first terminal device when the first access network device determines that the first terminal device is to be handed over from the first access network device to a second access network device, wherein the release information indicates the first terminal device to release the first configuration information, and the second access network device does not support the first multicast service.

11. The method according to any one of claims 3 to 10, wherein the method further comprises:
sending a first handover request to the second access network device, wherein the first handover request comprises an identifier of the QoE measurement configuration information of the unicast service and an application layer measurement identifier of the unicast service, wherein
the second access network device does not support the first multicast service.

12. The method according to claim 11, wherein the first handover request further comprises:
the QoE measurement configuration information of the unicast service.

13. The method according to any one of claim 2 and claims 4 to 10, wherein the method further comprises:
sending a first handover request to the second access network device, wherein the first handover request comprises an identifier of the QoE measurement configuration information of the unicast service and an application layer measurement identifier of the unicast service, wherein
the second access network device does not support the first multicast service, the identifier of the QoE measurement configuration information of the unicast service and the application layer measurement identifier of the unicast service are determined by the first access network device, and the identifier of the QoE measurement configuration information of the unicast service corresponds to an identifier of the QoE measurement configuration information of the first multicast service.

14. The method according to any one of claims 11 to 13, wherein the first handover request comprises the service type of the unicast service corresponding to a service type of the first multicast service.

15. The method according to any one of claims 11 to 13, wherein the first handover request further comprises:
an access network device-visible application layer measurement indicator corresponding to the unicast service.

16. The method according to any one of claims 1 to 15, wherein the method further comprises:
receiving a second handover request from a third access network device, wherein the third access network device does not support a multicast service, the second handover request comprises a service type of a second multicast service, and the second handover request is used to request a second terminal device to access the first access network device.

17. A measurement configuration method, wherein the method is applied to a first access network device, and comprises:
obtaining quality of experience QoE measurement configuration information of a first unicast service and first information, wherein the first information is related to QoE measurement on a first multicast service, and the first unicast service corresponds to the first multicast service;
determining application layer measurement configuration information of the first unicast service based on the QoE measurement configuration information of the first unicast service and the first information; and
sending the application layer measurement configuration information to a first terminal device.

18. The method according to claim 17, wherein the first information comprises first indication information, and the first indication information indicates that the first terminal device uses the QoE measurement configuration information of the first unicast service when the first terminal device changes from receiving the first unicast service to receiving the first multicast service; and
the application layer measurement configuration information comprises second indication information, and the second indication information indicates that the first terminal device uses the application layer measurement configuration information when the first terminal device changes from receiving the first unicast service to receiving the first multicast service.

19. The method according to claim 18, wherein the method further comprises:
sending a first handover request to a second access network device, wherein the first handover request comprises an identifier of QoE measurement configuration information of the first multicast service and an application layer measurement identifier of the first multicast service, wherein
the second access network device supports the first multicast service, the identifier of the QoE measurement configuration information of the first multicast service and the application layer measurement identifier of the first multicast service are determined by the first access network device, and the identifier of the QoE measurement configuration information of the first multicast service corresponds to an identifier of the QoE measurement configuration information of the first unicast service.

20. The method according to claim 19, wherein the first handover request comprises a service type of the first multicast service corresponding to a service type of the first unicast service.

21. The method according to any one of claims 17 to 20, wherein the method further comprises:
receiving a second handover request from a third access network device, wherein the second handover request is used to request a second terminal device to access the first access network device, the third access network device supports a multicast service, and the second handover request comprises an identifier of QoE measurement configuration information of a second unicast service and an application layer measurement identifier of the second unicast service, wherein
the identifier of the QoE measurement configuration information of the second unicast service and the application layer measurement identifier of the second unicast service are determined by the third access network device, and an identifier of QoE measurement configuration information of a second multicast service corresponds to the identifier of the QoE measurement configuration information of the second unicast service.

22. The method according to claim 21, wherein the second handover request further comprises a service type of the second unicast service corresponding to a service type of the second multicast service.

23. The method according to claim 21 or 22, wherein the second handover request further comprises access network device-visible application layer measurement configuration information corresponding to the second unicast service.

24. The method according to any one of claims 21 to 23, wherein the method further comprises:
receiving application layer measurement result information sent by the second terminal device, wherein the application layer measurement result information comprises a session identifier of a multicast service.

25. The method according to any one of claims 21 to 23, wherein the method further comprises:
receiving application layer measurement result information sent by the second terminal device, wherein the application layer measurement result information comprises an identifier of a network slice, and the identifier of the network slice indicates a network slice of a multicast service corresponding to the application layer measurement result information or a network slice of a unicast service.

26. The method according to claim 23 or 24, wherein the method further comprises:
receiving access network device-visible application layer measurement result information sent by the second terminal device.

27. An application layer measurement method, wherein the method is applied to a terminal device, and comprises:
receiving application layer measurement configuration information and first information that are sent by a first access network device, wherein
the application layer measurement configuration information comprises application layer measurement configuration information of a first multicast service, the first information is related to application layer measurement on a first unicast service, the first unicast service corresponds to the first multicast service, the first information comprises first indication information, and the first indication information indicates that the terminal device uses the application layer measurement configuration information of the first multicast service when the terminal device changes from receiving the first multicast service to receiving the first unicast service; or
the application layer measurement configuration information comprises application layer measurement configuration information of a first multicast service, and the first information comprises application layer measurement configuration information of a first unicast service; or
the application layer measurement configuration information comprises application layer measurement configuration information of a second unicast service, the first information is related to application layer measurement on a second multicast service, the second unicast service corresponds to the second multicast service, the first information comprises second indication information, and the second indication information indicates that the terminal device uses the application layer measurement configuration information of the second unicast service for measurement when the terminal device changes from receiving the second unicast service to receiving the second multicast service; and
sending, by the terminal device, application layer measurement result information to the first access network device based on the application layer measurement configuration information and the first information.

28. The method according to claim 27, wherein the application layer measurement result information comprises a session identifier of the first multicast service; or
the application layer measurement result information comprises a session identifier of the first multicast service and an identifier of a network slice.

29. The method according to claim 28, wherein the application layer measurement configuration information of the first multicast service comprises the session identifier of the first multicast service.

30. The method according to claim 28 or 29, wherein the first access network device supports the first multicast service, and the method further comprises:
receiving first configuration information sent by the first access network device, wherein the first configuration information comprises access network device-visible application layer measurement configuration information, and the first configuration information is used to configure the terminal device to report access network device-visible application layer measurement result information of the first multicast service; and
sending first measurement result information to the first access network device based on the first configuration information, wherein the first measurement result information comprises the access network device-visible application layer measurement result information, and the first measurement result information comprises the session identifier of the first multicast service.

31. A communication apparatus, comprising a unit or a module configured to perform the measurement configuration method according to any one of claims 1 to 16.

32. A communication apparatus, comprising a unit or a module configured to perform the measurement configuration method according to any one of claims 17 to 26.

33. A communication apparatus, comprising a unit or a module configured to perform the measurement configuration method according to any one of claims 27 to 30.

34. A communication apparatus, comprising a processor and an interface, wherein
the processor is configured to read instructions to perform the measurement configuration method according to any one of claims 1 to 16, the measurement configuration method according to any one of claims 17 to 26, or the measurement configuration method according to any one of claims 27 to 30.

35. A computer-readable storage medium, wherein the computer-readable storage medium stores a computer program, and when the computer program is executed, the measurement configuration method according to any one of claims 1 to 30 is performed.
